# EUROPEAN PATENT APPLICATION

(11) **EP 2 206 552 A2**
(43) Date of publication of application: **14.07.2010**
(21) Application number: 09178577.4
(22) Date of filing: 18.12.2003
(51) Int. Cl.: B01J 23/42, B01J 23/58, B01J 37/03, B01J 37/02, B01J 23/75, B01J 21/06, C01B 3/16, B01J 19/00

(54) **Method for the preparation of catalysts for hydrogen generation**

(30) Priority: 20.12.2002 US 434728 P
(62) Divisional of application: 03814265.9
(71) Applicant: Honda Giken Kogyo Kabushiki Kaisha, Tokyo (JP); Symyx Technologies, Inc., Santa Clara, CA 95051 (US)
(72) Inventor: Hagemeyer, Alfred, Sunnyvale, CA 94086 (US); Brooks, Christopher; James, Columbus, OH 43212 (US); Carhart, Raymond, F., Cupertino, CA 95014 (US); Yaccato, Karin, South San Francisco, CA 94107 (US); Lesik, Andreas, 62-500, Konin (PL)
(74) Representative: Berglund, Magnus

(57) **Abstract**

A method of preparing a platinum-and sodium-containing catalyst comprising :
impregnating all non-platinum-and non-sodium-containing components of the catalyst composition onto a surface to form a first surface;
impregnating a platinum-containing solution to the first surface to form a platinum-containing surface;
calcining the platinum-containing surface to form a calcined platinum containing coating;
impregnating a sodium-containing solution to the calcined platinum-containing coating to form a second surface; and
drying the second surface.

## Description

### CROSS-REFERENCE TO RELATED APPLICATIONS

The present application claims benefit from earlier filed U.S. Provisional Application No. 60/434,728, filed December 20, 2002, which is incorporated herein in its entirety by reference for all purposes. The present application also incorporates by reference the US Patent Application No. _ entitled "Methods for the Preparation of Catalysts Hydrogen Generation" naming as inventors Hagemeyer et al. (Attorney Docket No. 7080-011-01) filed on the same date as the present application.

### BACKGROUND OF THE INVENTION

### Field of the Invention

The invention relates to improved methods of depositing platinum, vanadium, molybdenum, and cobalt on a surface. The invention also relates to improved preparation of platinum- and/or sodium-containing catalysts. More particularly, the invention includes methods of preparing both precious metal- and non-precious metal-containing catalysts for the generation of a hydrogen-rich gas from gas mixtures containing carbon monoxide and water, such as water-containing syngas mixtures.

### Discussion of the Related Art

The WGS reaction is one mechanism for producing a hydrogen-rich gas from water (steam) and carbon monoxide. An equilibrium process, the water gas shift reaction, shown below, converts water and carbon monoxide to hydrogen and carbon dioxide, and vice versa. 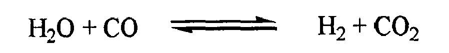 Various catalysts have been developed to catalyze the WGS reaction. These catalysts are typically intended for use at temperatures greater than 450 °C and/or pressures above 1 bar. For instance, U.S. Patent No. 5,030,440 relates to a palladium and platinum-containing catalyst formulation for catalyzing the shift reaction at 550 to 650 °C. See also U.S. Patent No. 5,830,425 for an iron/copper based catalyst formulation.

Catalytic conversion of water and carbon monoxide under water gas shift reaction conditions has been used to produce hydrogen-rich and carbon monoxide-poor gas mixtures. Existing WGS catalysts, however, do not exhibit sufficient activity at a given temperature to reach or even closely approach thermodynamic equilibrium concentrations of hydrogen and carbon monoxide such that the product gas may subsequently be used as a hydrogen feed stream. Specifically, existing catalyst formulations are not sufficiently active at low temperatures, that is, below about 450 °C. See U.S. Patent No. 5,030,440.

Numerous chemical and energy-producing processes require a hydrogen-rich composition (*e.g.* feed stream). A hydrogen-rich feed stream is typically combined with other reactants to carry out various processes. In other processes, the hydrogen-rich feed stream should not contain components detrimental to the process. Fuel cells such as polymer electrode membrane ("PEM") fuel cells, produce energy from a hydrogen-rich feed stream. PEM fuel cells typically operate with a feed stream gas inlet temperature of less than 450 °C. Carbon monoxide is excluded from the feed stream to the extent possible to prevent poisoning of the electrode catalyst, which is typically a platinum-containing catalyst. See U.S. Patent No. 6,299,995.

One route for producing a hydrogen-rich gas is hydrocarbon steam reforming. In a hydrocarbon steam reforming process steam is reacted with a hydrocarbon fuel, such as methane, iso-octane, toluene, *etc.,* to produce hydrogen gas and carbon dioxide. The reaction, shown below with methane (CH₄), is strongly endothermic; it requires a significant amount of heat.

CH₄ + 2H₂O → 4H₂ + CO₂

In the petrochemical industry, hydrocarbon steam reforming of natural gas is typically performed at temperatures in excess of 900 °C. Even for catalyst assisted hydrocarbon steam reforming the temperature requirement is often still above 700 °C. See, for example, U.S. Patent No. 6,303,098. Steam reforming of hydrocarbons, such as methane, using nickel- and gold-containing catalysts and temperatures greater than 450 °C is described in U.S. Patent No. 5,997,835. The catalyzed process forms a hydrogen-rich gas, with depressed carbon formation.

Platinum (Pt) is a well-known catalyst for both hydrocarbon steam reforming and water gas shift reactions. Under typical hydrocarbon steam reforming conditions, high temperature (above 850 °C) and high pressure (greater than 10 bar), the WGS reaction may occur post-reforming over the hydrocarbon steam reforming catalyst due to the high temperature and generally unselective catalyst compositions. See, for instance, U.S. Patent Nos. 6,254,807, 5,368,835, 5,134,109, and 5,030,440 for a variety of catalyst compositions and reaction conditions under which the water gas shift reaction may occur post-reforming.
A need exists, therefore, for improved methods of preparing precious metal- and non-precious metal-containing catalysts. In particular, a need exists for improved methods for preparing highly active and highly selective catalysts for the generation of a hydrogen-rich gas, such as a hydrogen-rich syngas.

### SUMMARY OF THE INVENTION

The invention meets the need for improved methods of preparing precious metal-and non-precious metal-containing catalysts. Preferably, the method applies to the preparation of catalysts for the generation of hydrogen and the oxidation of carbon monoxide to thereby provide a hydrogen-rich gas, such as a hydrogen-rich syngas, from a gas mixture of at least carbon monoxide and water.

The invention is, in a first general embodiment, a method of depositing platinum on a surface comprising treating the surface with platinum salts in the presence of an acid or base, followed either by sufficient washing of the surface to remove essentially all soluble non-platinum containing salts, or alternatively if volatile non-platinum products are produced, by heating the surface to drive off the volatile products. The surface may then be calcined at a temperature ranging from no more than about 250 °C to as high as about 550 °C, or reduced without prior calcination at a temperature of about 150 °C to about 350 °C.

The invention is, in a second general embodiment, a method of preparing a sodium-containing catalyst, comprising depositing all non-sodium components of the catalyst composition on a surface, followed by impregnating the surface with a sodium-containing component and then calcining the surface at a temperature ranging from about 200 °C up to about 350 °C.

The invention is, in a third general embodiment, a method of preparing a platinum- and sodium-containing catalyst, comprising first depositing on a surface all the non-platinum and non-sodium components of the catalyst composition, followed by the sequential or simultaneous application of platinum-containing and sodium-containing precursors. Application of platinum, alone or with sodium, may be followed by a calcination process while application of a sodium-containing precursor may be subsequently treated by drying at generally lower temperatures than a calcination process.

The invention is, in a fourth general embodiment, a method of depositing cobalt on a surface, comprising treating the surface with a cobalt(+3) nitrate or nitrite complex followed by calcining the surface at a temperature of no greater than about 425 °C.

The invention is, in a fifth general embodiment, a method of depositing vanadium on a surface, comprising treating the surface with an aqueous solution of a vanadium (+5) complex, including, for example, a vanadium(+5) formate complex, or a vanadium complex formed by V₂O₅ or NH₄VO₃ in H₂O₂, followed by calcining the surface at a temperature of less than about 500 °C.

The invention is, in a sixth general embodiment, a method of preparing a catalyst support, comprising adding stabilizers to Zr(OH)₄ to produce a stabilized ZrO₂ catalyst support, including as stabilizers, for example, Ce, La, W, Ta, Nb, Ti, Mo, V, and Si. The resulting stabilized zirconia can be utilized as a primer layer on a mechanical support to provide a suitable catalyst support.

### BRIEF DESCRIPTION OF THE DRAWINGS

The accompanying drawings, which are included to provide a further understanding of the invention and are incorporated in and constitute a part of this specification, illustrate preferred embodiments of the invention and together with the detailed description serve to explain the principles of the invention. In the drawings:
Figs. 1A-1I illustrate the process of producing a library test wafer;
Figs. 2A-2J illustrate the process of producing a library test wafer;
Figs. 3A-3F illustrate the compositional make-up of an exemplary library test wafer, with and without carrier and/or water;
Figs. 4A-4D illustrate the process of producing a library test wafer;
Figs. 4E-4I illustrate SpotFire plots of the CO conversion versus CO₂ production for the wafer under WGS conditions at various temperatures;
Figs. 5A-5F illustrate the compositional make-up of various exemplary library test wafers. The legends for Figs. 5A - 5C apply only to Figs. 5A - 5C. The legend for Figs. 5D-5F applies only to Figs. 5D-5F;
Fig. 6A illustrates a representative plot of CO conversion versus CO2 production for a prototypical library test wafer at various temperatures;
Fig. 6B illustrates the effect of catalyst selectivity and activity versus the WGS mass balance;
Fig. 6C illustrates the effect of temperature on catalyst performance under WGS conditions;

### DETAILED DESCRIPTION OF THE INVENTION

The invention relates to improved methods of preparing both precious metal- and non-precious metal-containing catalysts and methods for depositing metals on a surface. Preferably, the methods are directed towards the preparation of catalysts for the generation of hydrogen and the oxidation of carbon monoxide to thereby provide a hydrogen-rich gas, such as a hydrogen-rich syngas, from a gas mixture of at least carbon monoxide and water. Such catalysts may be supported on a bulk metal or on a suitable carrier, such as any one member or a combination of alumina, silica, zirconia, titania, ceria, magnesia, lanthania, niobia, zeolite, pervoskite, silica clay, yttria, and iron oxide.

### 1. Definitions

*Water gas shift ("WGS") reaction:* Reaction which produces hydrogen and carbon dioxide from water and carbon monoxide, and vice versa:

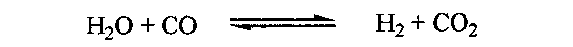

Generally, and unless explicitly stated to the contrary, WGS catalysts can be advantageously applied both in connection with the forward reaction as shown above (*i.e.*, for the production of H₂), or alternatively, in connection with the reverse reaction as shown above (*i.e.*, for the production of CO).

*Methanation reaction:* Reaction which produces methane and water from a carbon source, such as carbon monoxide or carbon dioxide, and hydrogen:

CO + 3H₂ → CH₄ + H₂O

CO₂ + 4H₂ → CH₄ + 2H₂O

*"Syngas" (also called synthesis gas):* Gaseous mixture comprising hydrogen (H₂) and carbon monoxide (CO) which may also contain other gas components such as carbon dioxide (CO₂), water (H₂O), methane (CH₄) and nitrogen (N₂).

*Hydrocarbon:* Compound containing hydrogen, carbon, and, optionally, oxygen.

The Periodic Table of the Elements is based on the present IUPAC convention, thus, for example, Group 11 comprises Cu, Ag and Au. (See http://www.iupac.org dated May 30, 2002.)

As discussed herein, the catalyst composition nomenclature uses a dash (i.e., "-") to separate catalyst component groups where a catalyst may contain one or more of the catalyst components listed for each component group, brackets (i.e., "{ }") are used to enclose the members of a catalyst component group, "{two of .... }" is used if two or more members of a catalyst component group are required to be present in a catalyst composition, "blank" is used within the "{ }" to indicate the possible choice that no additional element is added, and a slash (i.e., "/") is used to separate supported catalyst components from their support material, if any. Additionally, the elements within a catalyst composition formulation include all possible oxidation states, including oxides, or salts, or mixtures thereof.

Using this shorthand nomenclature in this specification, for example, "Pt-{Rh, Ni}-{Na, K, Fe, Os)/ZrO₂" would represent catalyst compositions containing Pt, one or more of Rh and Ni, and one or more of Na, K, Fe, and Os supported on ZrO₂ all of the catalyst elements may be in any possible oxidation state, unless explicitly indicated otherwise. "Pt-Rh-Ni-{two of Na, K, Fe, Os}" would represent a supported or unsupported catalyst composition containing Pt, Rh, and Ni, and two or more of Na, K, Fe, and Os. "Rh-{Cu,Ag,Au}-{Na, K, blank}/TiO₂" would represent catalyst compositions containing Rh, one or more of Cu, Ag and Au, and, optionally, and one of Na or K supported on TiO₂.

### 2. Platinum Deposition

The invention provides a method of depositing platinum on a surface, comprising treating the surface with a platinum salt, such as a platinum(+4) chloride, in the presence of an acid, or acid salt, or a base, followed by sufficient washing of the surface to remove essentially all of the water-soluble non-platinum containing salts, or alternatively by heating to sufficiently high enough temperatures to decompose and drive off any volatile salt by-products. The surface is then calcined at a temperature of from about 250 °C to about 350 °C. Preferably, the surface is that of a catalyst carrier surface or bulk catalyst surface. Also preferred is that the catalyst is a water gas shift catalyst composition.

The interaction between the platinum and the acid, the acid salt, or the base, may be accomplished in a variety of ways. One way is to apply the platinum salt to the surface and then expose it to the acid, the acid salt, or the base; another way is to apply the acid, the acid salt, or the base, to the surface and then add the platinum. Yet another way is to simultaneously add the acid, the acid salt, or the base and the platinum to the surface.

Tetramethylammonium hydroxide is an example of a suitable base and results in precipitation of platinum hydroxide on the catalyst surface as shown:

PtCl₄ + NMe₄OH → insoluble Pt(OH)₄ + soluble NMe₄Cl

Oxamic acid is an example of a suitable acid and results in precipitation of platinum oxamate on the catalyst surface as shown:

PtCl₄ + H₂COCO₂H → insoluble Pt-oxamate+volatile HCI

Advantages of using platinum(+4) chloride as Pt precursor include low cost and high water solubility. However, because chloride ions are catalyst poisons, the deposited platinum salts (such as Pt(OH)₄ or Pt-oxamate as shown above) must be washed with a sufficient amount of a solvent, such as water, to effectively remove the chloride salt by-products (such as NMe₄Cl or HCl as shown above), or heated to sufficiently high enough temperatures to decompose and drive off any volatile chloride salt by-products.

Specifically, the improved method of depositing platinum comprises the steps of:
(a) applying a solution of a platinum salt to a surface to form a coated surface; and
(b) adding an acid, or an acid salt, or a base, to the solution on the coated surface to precipitate a Pt compound on the surface to form a Pt containing surface. An alternative method is to first impregnate the surface with the acid, the acid salt, or the base and then introduce the platinum salt.

When an acid, or an acid salt is utilized to precipitate the Pt compound, then the surface may be further treated by either:
treating the Pt containing surface by, without regard to sequential order:
   (i) washing the Pt containing surface with a solvent to substantially remove essentially all water-soluble salts; and
   (ii) calcining the Pt containing surface at a temperature of about 250 °C to less than about 500 °C, preferably at a temperature of from about 250 °C to about 350 °C, or
   when the non-platinum containing salts are capable of being decomposed at suitable temperatures, calcining the Pt containing surface at a temperature of about 450 °C to about 550 °C.

When a base is utilized to precipitate the Pt compound, then the surface may be further treated by either:
(i) treating the Pt containing surface by, without regard to sequential order:
(ii) washing the Pt containing surface with a solvent to substantially remove essentially all water-soluble salts; and
(ii) calcining the Pt containing surface at a temperature of about 250 °C to less than about 500 °C, preferably at a temperature of from about 250 °C to about 350 °C, or
when the non-platinum containing salts are capable of being decomposed at suitable temperatures, then optionally drying the surface at a temperature of about 60 °C to about 400 °C; and
calcining the surface at a temperature of about 300 °C to about 550 °C.

An alternative method of the invention is to directly reduce the washed surface at from about 150 °C to about 300 °C and not undergo the calcination process.

A platinum salt which may be utilized in the above methods consists of, for example, PtCl₂, PtCl₃, PtCl₄, PtBr₄, Pt(SO₄)₂, PtCl₂(NH₃)₄, PtCl₄(NH₃)₂, H₂PtCl₆, K₂PtCl₆, Na₂PtCl₆, (NH₄)₂PtCl₆, K₂PtCl₄, Na₂PtCl₄, Pt(NO₃)₂ and all amine salts thereof. A particularly preferred platinum salt is PtCl₄. and preferably the platinum salt is in an aqueous solution.

Acids and acid salts suitable for use in the above methods include, for example, oxamic acid, oxalic acid, lactic acid, citric acid, malic acid, tartaric acid, acetic acid, formic acid and salts thereof. A preferred acid is oxamic acid. Bases suitable for use in the above methods include, for example, N(CH₃)₄OH, NH₄OH, (NH₄)₂CO₃, (NH₄)HCO₃, NaOH, KOH, CsOH, Na₂CO₃, K₂CO₃, NaHCO₃ and KHCO₃. However, of those, the bases containing ammonium or ammonium derivatives, such as, N(CH₃)₄OH, NH₄OH, (NH₄)₂CO₃ and (NH₄)HCO₃ produce non-platinum containing salts which may be readily decomposed by heating and thus do not require a washing step.

Inorganic acids can be used to precipitate the basic Pt precursors. For example, inorganic acids that upon calcination provide a non-harmful or beneficial metal oxide can be used. Suitable inorganic acids include, for example, perrhenic acid, silicic acid, molybdic acid, and heteropolyacids such as molybdosilicic acid or molybdovanadic acid.

The above methods may further comprise a step of reducing the Pt compound. Additionally, a drying step, after the Pt compound is precipitated on the surface at a temperature of about 60 °C to about 400 °C, may be further included in the preparation method. A flash drying process may be used to effect the drying after the Pt compound is precipitated on the surface. Dispersion of metals can be enhanced with flash drying of the catalyst. Any suitable methods of flash drying may be used. In methods where the acid, the acid salt, or the base, is first added, there may also be a drying step prior to addition of the Pt salt.

A particularly preferred method of the invention of depositing platinum comprises the steps of:
(a) applying a solution of a platinum salt, preferably an aqueous solution, to a surface;
(b) adding a hydroxide solution to the surface to precipitate platinum hydroxide on the surface; then
(c) washing the surface containing the precipitated platinum hydroxide with a solvent, preferably water, to substantially remove essentially all water-soluble chloride ions; and then
(d) treating the platinum hydroxide with a reducing agent, preferably hydrogen gas, at a temperature of from about 150 °C to about 350 °C. An alternative preferred method is to perform steps (a) and (b) in the opposite order.

Hydroxide solutions which may be utilized in the method consist of, for example, sodium hydroxide, potassium hydroxide, ammonium hydroxide or mixtures thereof.

### Sodium Impregnation Method

The invention provides a method of preparing a sodium-containing catalyst formulation, comprising impregnating a surface with all non-sodium components of the catalyst composition, followed by impregnating the surface with a sodium-containing component. The surface is then heated or calcined at a relatively mild temperature of from about 200 °C to about 400 °C. One preferred sodium-containing component is sodium hydroxide. One preferred catalyst formulation is a water gas shift catalyst formulation.

Treatment of the catalyst surface with the sodium-containing component in such a manner has the advantage of not subjecting thermally sensitive sodium to the high calcination temperatures typically associated with catalyst preparations. Since high temperature treatments may also be detrimental for platinum (in particular, reduced platinum), the same catalyst preparation procedure may also be applied to Pt- and Na-containing catalysts. For instance, where there is a post-coimpregnation of both Pt-containing and Na-containing species on the catalyst surface, the catalyst could then be subjected to the relatively mild temperature conditions of the present invention.

One embodiment of the method is a preparation sequence with all of the non-sodium-containing catalyst components deposited on a surface which is then calcined at greater than about 350 °C. This calcined surface then has a sodium-containing precursor added and then undergoes drying at a temperature of from about 200 °C to about 400 °C, preferably at a temperature no greater than the temperature of a reaction catalyzed by the sodium-containing catalyst.

Another embodiment of the method can be preparation step involving the removal of solvent or evaporative materials present on the catalyst at reduced, for example, less than atmospheric, pressure. Various means can be implemented to achieve a less than atmospheric pressure at the catalyst surface which surface may then be heated to remove the undesired materials.

Yet another embodiment of the present invention may involve a preparation sequence where all of the non-sodium- and any non-platinum-containing catalyst components are deposited on a surface, followed by deposition of any platinum-containing components. The surface may then be calcined at temperatures greater than about 350 °C followed by addition of a sodium-containing precursor, such as sodium hydroxide and calcination at less that about 400 °C, preferably at less than about 200 °C, most preferably at a temperature no greater than the temperature of a reaction catalyzed by the sodium-containing catalyst.

A variety of sodium-containing precursors may be utilized in the present method, which precursors preferably decompose at temperatures of less than about 400 °C, such as for example, NaOH, Na₂CO₃, NaHCO₃, Na₂O₂ and NaOOCH.

### Pt and Na Containing Catalyst Preparation Method

A general embodiment of the invention is a method for preparing a platinum- and sodium-containing catalyst by depositing all non-platinum and non-sodium components of the catalyst composition onto a surface, and then applying platinum- and sodium-containing precursors, either individually or in combination, either as a mixture or a composite of platinum and sodium salts, to the surface. The next step is to calcine the coated surface containing the catalyst components at a temperature of from about 200 °C to about 400 °C. As used herein, deposition of components of a catalyst composition may include impregnating or contacting the component precursor with the catalyst support followed by calcination to decompose the component precursor to form the catalyst component.

In this embodiment, the platinum- and sodium-containing precursors may be applied individually or as a mixture to the surface. The mixture may be a mixture of a platinum-containing precursor and a sodium-containing precursor, or the mixture may be a composite salt containing both platinum and sodium, such as Na₂Pt(OH)₆, for example. The method may further include a washing of the surface, either before or after the calcination step, with a solvent to substantially remove essentially all water-soluble salts after the application of the platinum- and sodium-containing precursors to the surface. The method may further include a step of reducing the platinum.

Another method of preparing a platinum- and sodium-containing catalyst according to the invention comprises the steps of:
(a) depositing all non-platinum and non-sodium components of the catalyst composition onto a surface to form a first surface;
(b) applying platinum-containing precursor solutions to the first surface to form a platinum-containing surface;
(c) calcining the platinum-containing surface at a temperature of from about 200 °C to about 400 °C to form a calcined platinum-containing surface;
(d) applying sodium-containing precursor solutions to the calcined platinum-containing surface to form a second surface; and
(e) drying the second surface, preferably at a temperature of from about 110 °C to about 400 °C, more preferably at a temperature no greater than a reaction temperature of a reaction catalyzed by the platinum- and sodium-containing catalyst. The additional step of reducing the platinum, after step(c), is also preferred.

Another method of preparing a platinum- and sodium-containing catalyst comprises the steps of:
(a) depositing all non-platinum and non-sodium components of the catalyst composition onto a surface to form a first surface;
(b) treating the first surface by, without regard to sequential order:
   (i) applying a platinum-containing precursor solution and then calcining;
      and
   (ii) applying a sodium-containing precursor solution and then drying.

The order of the application steps is preferable dependent on the acidity or basicity of the non-platinum and non-sodium components. When those components are acidic, then preferably the sodium-containing precursor is applied and dried first and is followed by application and calcination of the platinum-containing precursor. When the non-platinum and non-sodium components are basic the opposite order is preferred. Preferably, the calcination step is carried out at a temperature from about 250 °C and about 500 °C, while the drying step is done at a temperature from about 110°C and about 400 °C. In any case the platinum is preferably reduced after calcination. Furthermore, the reaction between the platinum and the acid, its salt or the base may occur in the variety of ways set forth above.

Another improved method of preparing a platinum- and sodium-containing catalyst according to the invention comprises the steps of:
(a) depositing all non-platinum and non-sodium components of the catalyst composition onto a surface;
(b) applying a solution of PtCl₄ to the surface;
(c) adding an acid or a base to the solution on the surface to precipitate a Pt compound onto the surface.
   When an acid is utilized to precipitate the Pt compound, then the surface is further treated by:
(d) calcining the surface at a temperature of about 450 °C to about 500 °C to form a calcined surface;
(e) applying a solution of sodium hydroxide to the calcined surface; and then
(f) calcining the surface at a temperature of about 200 °C to about 250 °C.

When a base is utilized to precipitate the Pt compound, then the surface is further treated by:
(d) treating the surface by, without regard to sequential order:
   washing the surface with a solvent to substantially remove essentially all water-soluble salts; and
   calcining the surface at a temperature of from about 250 °C to about 350 °C;
(e) applying a solution of sodium hydroxide to the surface; and then
(f) calcining the surface at a temperature of from about 200 °C to about 250 °C.

In either of these methods, the precipitated platinum may be reduced by addition of either the acid or base above.

The preferred sodium-containing precursors include, for example, NaOH, Na₂CO₃, NaHCO₃, Na₂O₂ and NaOOCH, while the preferred platinum-containing precursor include, for example, Pt(NH₃)₄(NO₃)₂, Pt(NH₃)₂(NO₂)₂, Pt(NH₃)₄(OH)₂, K₂Pt(NO₂)₄, Pt(NO₃)₂, H₂PtCl₆, PtCl₄, Pt(NH₃)₄(HCO₃)₂, Pt(NH₃)₄(HPO₄), (NMe₄)₂Pt(OH)₆, H₂Pt(OH)₆, K₂Pt(OH)₆, Na₂Pt(OH)₆, K₂Pt(CN)₆ and K₂Pt(C₂O₄)₂. A particularly preferred precursor can be Na₂Pt(OH)₆, which contains both platinum and sodium. A preferred solvent for any washing step is water.

### Co(+3) Nitrates and Nitrites as Co Sources for Catalyst Preparation

The invention also provides for a method of depositing cobalt on a surface, comprising treating the surface with a cobalt(+3) salt, particularly cobalt (+3) nitrates and nitrites, followed by calcination at a temperature of no greater than about 425 °C.

Possible cobalt(+3) salts to be utilized in the method include, for example, Na₃Co(NO₂)₆, Co(NH₃)₆(NO₃)₃, Co(H₂N-CH₂-CH₂-NH₂)₃(NO₃)₃, and Co(NR₃)₆(NO₃)₃, wherein R comprises an alkyl group with between one and four carbon atoms; particularly preferred are the cobalt(+3) salts: Co(NH₃)₆(NO₃)₃, Na₃Co(NO₂)₆ or mixtures thereof. Preferred are cobalt (+3) containing solutions which are stable aqueous solutions, such as, for example, hexaammine Co(+3) nitrate solubilized in hot water in the range of from 60 °C to 100 °C refluxing water.

Hexaammine Co(+3) nitrate was found to be the preferred nitrate due to its solubility in hot water, its high oxidation state of +3 for cobalt and its ease of decomposition into cobalt oxide at about 300 °C. Hexaammine Co(+3) nitrate was found to be more catalytically active than Co(+2) nitrate in Co-containing water gas shift catalyst compositions. Preferably, the surface is that of a catalyst carrier surface or a bulk catalyst surface. Also preferred is that the catalyst composition is a water gas shift catalyst composition. Further preferred is limiting the calcination temperature to the range of temperatures of less than about 300 °C.

### Ammonium Vanadium(+5) Formate and V(+5) Peroxo Complexes as a Vanadium Source for Catalyst Preparation

The invention also provides for a method of depositing vanadium on a surface, comprising treating the surface with V(+5) compounds, for example, a vanadium(+5) formate, or a vanadium complex formed by V₂O₅ or NH₄VO₃ in H₂O₂, and calcining at a temperature of less than about 500 °C. Ammonium vanadium(+5) formate was found to be the preferred formate. Preferably, the surface is that of a catalyst carrier surface or a bulk catalyst surface. Also preferred is that the catalyst composition is a water gas shift catalyst composition.

Two commonly used vanadium precursors were found to have several disadvantages. Vanadyl oxalate, prepared by dissolving V₂O₅ in aqueous oxalic acid, has vanadium in the +4 oxidation state. Ammonium metavanadate already has vanadium in the oxidation state of+5, but suffers from poor solubility in water. Advantageously, ammonium vanadium(+5) formate and the V(+5) peroxo complexes have high oxidation states of +5 for vanadium, are readily soluble in water and are stable at room temperature.

Other possible vanadium precursors which may be utilized in the method include the ammonium vanadium(+5) formate derivatives where the ammonium is substituted, such as for example tetramethylammonium vanadium(+5) formate, or other ammonium derivatives, NR₄ where R comprises an alkyl group with between one and four carbon atoms. Preferably, the precursor may be solubilized in an aqueous solution. A preferred vanadium species, ammonium vanadium(+5) formate, may be prepared as an aqueous solution with a V concentration of between about 0.3 to about 0.5 M, by reacting NH₄VO₃, formic acid and ammonia in hot water, 80 °C to refluxing 100 °C water. Vanadium citrate-based compounds can have both high aqueous solubility and a relative low decomposition temperature. Another embodiment includes dissolving NH₄VO₃ in about 30% H₂O₂ solution with stirring for 15 minutes, and warming gently to produce a stable orange V(+5) precursor solution. One molar vanadium concentration solutions can be produced by this reaction scheme.

The temperature of the calcination step following vanadium impregnation can be from about 150 °C and about 550 °C, or from about 300 °C and about 550 °C, most particularly preferred is to limit the calcination step to a temperature of from about 150 °C and about 250 °C.

### Catalyst Compositions

The catalysts prepared from the above discussed preparative procedures, catalyst precursors and impregnation sequences encompass both precious metal and non-precious metal components. The catalyst components are typically present in a mixture of the reduced or oxide forms; typically one of the forms will predominate in the mixture. The catalysts may be prepared by mixing the metals and/or metalloids in their elemental forms or as oxides or salts to form a catalyst precursor. This catalyst precursor mixture generally undergoes a calcination and/or reductive treatment, which may be *in-situ* (within the reactor), prior to use. Without being bound by theory, the catalytically active species are generally understood to be species which are in the reduced elemental state or in other possible higher oxidation states. The catalyst precursor species are believed to be substantially completely converted to the catalytically active species by the pre-use treatment. Nonetheless, the catalyst component species present after calcination and/or reduction may be a mixture of catalytically active species such as the reduced metal or other possible higher oxidation states and uncalcined or unreduced species depending on the efficiency of the calcination and/or reduction conditions. A preferred embodiment of the invention is the preparation of catalysts for the water gas shift reaction.

### Supports

The catalysts prepared from the preparative methods, catalyst precursors and impregnation techniques of the invention may be supported. Preferably, the carrier may be any support or carrier used with the catalyst which allows the water gas shift reaction to proceed. The support or carrier may be a porous, adsorptive, high surface area support with a surface area of about 25 to about 500 m²/g. The porous carrier material may be relatively inert to the conditions utilized in the WGS process, and may include carrier materials that have traditionally be utilized in hydrocarbon steam reforming processes, such as, (1) activated carbon, coke, or charcoal; (2) silica or silica gel, silicon carbide, clays, and silicates including those synthetically prepared and naturally occurring, for example, china clay, diatomaceous earth, fuller's earth, kaolin, etc.; (3) ceramics, porcelain, bauxite; (4) refractory inorganic oxides such as alumina, titanium dioxide, zirconium oxide, magnesia, etc.; (5) crystalline and amorphous aluminosilicates such as naturally occurring or synthetically prepared mordenite and/or faujasite; and, (6) combinations of these groups.

Carrier screening with catalysts containing Pt as the only active noble metal revealed that a water gas shift catalyst may also be supported on a carrier comprising alumina, zirconia, titania, ceria, magnesia, lanthania, niobia, zeolite, pervoskite, silica clay, yttria and iron oxide. Perovskite may also be utilized as a support or as a dispersant for noble metals for the inventive catalyst formulations.

Stabilized zirconia supports can be prepared by a method of adding stabilizers to Zr(OH)₄ to produce a stabilized ZrO₂ catalyst support, including as stabilizers, for example, Ce, La, W, Ta, Nb, Ti, Mo, V, and Si. The stabilizers can be added at a concentration of, for example, five percent by mole of the total support. The mixture can be heated from about 400 °C to about 800 °C to produce the stabilized ZrO₂ catalyst support. Preferably, the starting Zr tetrahydroxide has a surface area for about 200 to about 400 m²/g. The resulting stabilized zirconia has a higher surface area after calcination than an unstabilized, undoped Zr hydroxide complex, and can be utilized as a primer layer on a mechanical support to provide a suitable catalyst support.

High surface area aluminas, such as gamma-, delta-, or theta-alumina are preferred alumina carriers. Other alumina carriers, such as mixed silica alumina, sol-gel alumina, as well as sol-gel or co-precipitated alumina-zirconia carriers, or Zr primed alumina carriers may be used. Alumina typically has a higher surface area and a higher pore volume than carriers such as zirconia and offers a price advantage over other more expensive carriers. Zeolites, including, faujasites (X, Y zeolites) can be suitable carriers.

Although the foregoing description is directed to the preferred embodiments of the invention, it is noted that other variations and modifications will be apparent to those skilled in the art, and which may be made without departing from the spirit or scope of the invention

The complete disclosure of the all references cited herein are incorporated herein in their entireties for all purposes.

### EXAMPLES

### General

Small quantity catalyst composition samples are generally prepared by automated liquid dispensing robots (Cavro Scientific Instruments) on flat quartz test wafers.

Generally, supported catalysts are prepared by providing a catalyst support (*e.g.* alumina, silica, titania, *etc*.) to the wafer substrate, typically as a slurry composition using a liquid-handling robot to individual regions or locations on the substrate or by wash-coating a surface of the substrate using techniques known to those of skill in the art, and drying to form dried solid support material on the substrate. Discrete regions of the support-containing substrate are then impregnated with specified compositions intended to operate as catalysts or catalyst precursors, with the compositions comprising metals (*e.g*. various combinations of transition metal salts). In some circumstances the compositions are delivered to the region as a mixture of different metal-containing components and in some circumstances (additionally or alternatively) repeated or repetitive impregnation steps are performed using different metal-containing precursors. The compositions are dried to form supported catalyst precursors. The supported catalyst precursors are treated by calcining and/or reducing to form active supported catalytic materials at discrete regions on the wafer substrate.

Bulk catalysts (*e.g*. noble-metal-free Ni-containing catalysts) may also be prepared on the substrate. Such multi-component bulk catalysts are purchased from a commercial source and/or are prepared by precipitation or co-precipitation protocols, and then optionally treated - including mechanical pretreatment (grinding, sieving, pressing). The bulk catalysts are placed on the substrate, typically by slurry dispensing and drying, and then optionally further doped with additional metal-containing components (*e.g*. metal salt precursors) by impregnation and/or incipient wetness techniques to form bulk catalyst precursors, with such techniques being generally known to those of skill in the art. The bulk catalyst precursors are treated by calcining and/or reducing to form active bulk catalytic materials at discrete regions on the wafer substrate.

The catalytic materials (*e.g.*, supported or bulk) on the substrate are tested for activity and selectivity for the WGS reaction using a scanning mass spectrometer ("SMS") comprising a scanning / sniffing probe and a mass spectrometer. More details on the scanning mass spectrometer instrument and screening procedure are set forth in U.S. Patent No. 6,248,540, in European Patent No. EP 1019947 and in European Patent Application No. EP 1186892 and corresponding U.S. Application No. 09/652,489 filed August 31, 2000 by Wang et al.*,* the complete disclosure of each of which is incorporated herein in its entirety. Generally, the reaction conditions (*e.g.* contact time and/or space velocities, temperature, pressure, *etc*.) associated with the scanning mass spectrometer catalyst screening reactor are controlled such that partial conversions (*i.e.*, non-equilibrium conversions, *e.g.,* ranging from about 10 % to about 40 % conversion) are obtained in the scanning mass spectrometer, for discrimination and ranking of catalyst activities for the various catalytic materials being screened. Additionally, the reaction conditions and catalyst loadings are established such that the results scale appropriately with the reaction conditions and catalyst loadings of larger scale laboratory research reactors for WGS reactions. A limited set of tie-point experiments are performed to demonstrate the scalability of results determined using the scanning mass spectrometer to those using larger scale laboratory research reactors for WGS reactions. See, for example, Example 12 of U.S. Provisional Patent Application Serial No.60/434,708 entitled "Platinum-Ruthenium Containing Catalyst Formulations for Hydrogen Generation" filed by Hagemeyer *et al.* on December 20, 2002.

### Preparative and Testing Procedures

The catalyst preparation method of the present invention were identified using high-throughput experimental technology, with the catalysts being prepared and tested in library format, as described generally above, and in more detail below. Specifically, such techniques were used for identifying catalyst compositions that were active and selective as WGS catalysts. As used in these examples, a "catalyst library" refers to an associated collection of candidate WGS catalysts arrayed on a wafer substrate, and having at least two, and typically three or more common metal components (including metals in the fully reduced state, or in a partially or fully oxidized state, such as metal salts), but differing from each other with respect to relative stoichiometry of the common metal components.

Depending on the library design and the scope of the investigation with respect to a particular library, multiple (*i.e.*, two or more) libraries were typically formed on each wafer substrate. A first group of test wafers each comprised about 100 different catalyst compositions formed on a three-inch wafer substrate, typically with most catalysts being formed using at least three different metals. A second group of test wafers each comprised about 225 different catalyst compositions on a four-inch wafer substrate, again typically with most catalysts being formed using at least three different metals. Each test wafer itself typically comprised multiple libraries. Each library typically comprised binary, ternary or higher-order compositions - that is, for example, as ternary compositions that comprised at least three components (*e.g.*, A, B, C) combined in various relative ratios to form catalytic materials having a molar stoichiometry covering a range of interest (*e.g.*, typically ranging from about 20 % to about 80 % or more (*e.g*. to about 100 % in some cases) of each component). For supported catalysts, in addition to varying component stoichiometry for the ternary compositions, relative total metal loadings and catalyst preparation methods and techniques were also investigated.

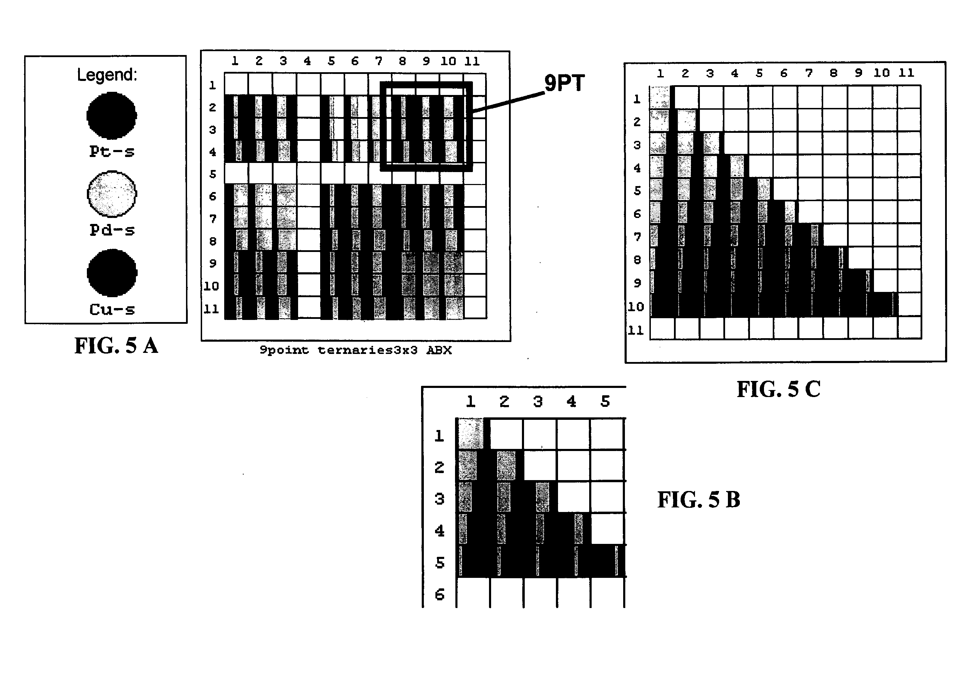

Typical libraries formed on the first group of (three-inch) test wafers included, for example, "five-point libraries" (*e.g.*, twenty libraries, each having five different associated catalyst compositions), or "ten-point" libraries (*e.g*., ten libraries, each having ten different associated catalyst compositions), or "fifteen-point libraries" (*e.g.*, six libraries, each having fifteen different associated catalyst compositions) or "twenty-point libraries" (*e.g.*, five libraries, each having twenty different associated catalyst compositions). Typical libraries formed on the second group of (four-inch) test wafers included, for example, "nine-point libraries" (*e.g.*, twenty-five libraries, each having nine different associated catalyst compositions), or "twenty-five point" libraries (*e.g.*, nine libraries, each having twenty-five different associated catalyst compositions). Larger compositional investigations, including "fifty-point libraries" (*e.g.*, two or more libraries on a test wafer, each having fifty associated catalyst compositions), were also investigated. Typically, the stoichiometric increments of candidate catalyst library members ranged from about 1.5 % (*e.g.* for a "fifty-five point ternary") to about 15 % (*e.g.,* for a "five-point" ternary). See, generally, for example, WO 00/17413 for a more detailed discussion of library design and array organization. Figs. 5A to 5F of the instant application show library designs for libraries prepared on a common test wafer, as graphically represented using Library Studio^{®} (Symyx Technologies, Inc., Santa Clara, CA), where the libraries may vary with respect to both stoichiometry and catalyst loading. Libraries of catalytic materials that vary with respect to relative stoichiometry and/or relative catalyst loading can also be represented in a compositional table, such as is shown in the several examples of this application.

Referring to Fig. 5A, for example, the test wafer includes nine libraries, where each of the nine libraries comprises nine different ternary compositions of the same three-component system. In the nomenclature of the following examples, such a test wafer is said to include nine, nine-point-ternary ("9PT") libraries. The library depicted in the upper right hand corner of this test wafer includes catalyst compositions comprising components A, B and X₁ in 9 different stoichiometries. As another example, with reference to Fig. 5B, a partial test wafer is depicted that includes a fifteen-point-ternary ("15PT") library having catalyst compositions of Pt, Pd and Cu in fifteen various stoichiometries. Generally, the composition of each catalyst included within a library is graphically represented by an association between the relative amount (*e.g.*, moles or weight) of individual components of the composition and the relative area shown as corresponding to that component. Hence, referring again to the fifteen different catalyst compositions depicted on the partial test wafer represented in Fig. 5B, it can be seen that each composition includes Pt (dark grey), Pd (light grey) and Cu (black), with the relative amount of Pt increasing from column 1 to column 5 (but being the same as compared between rows within a given column), with the relative amount of Pd decreasing from row 1 to row 5 (but being the same as compared between columns within a given row), and with the relative amount of Cu decreasing from a maximum value at row 5, column 1 to a minimum at, for example, row 1, column 1. Fig. 5C shows a test wafer that includes a fifty-point-ternary ("50PT") library having catalyst compositions of Pt, Pd and Cu in fifty various stoichiometries. This test library could also include another fifty-point ternary library (not shown), for example with three different components of interest.

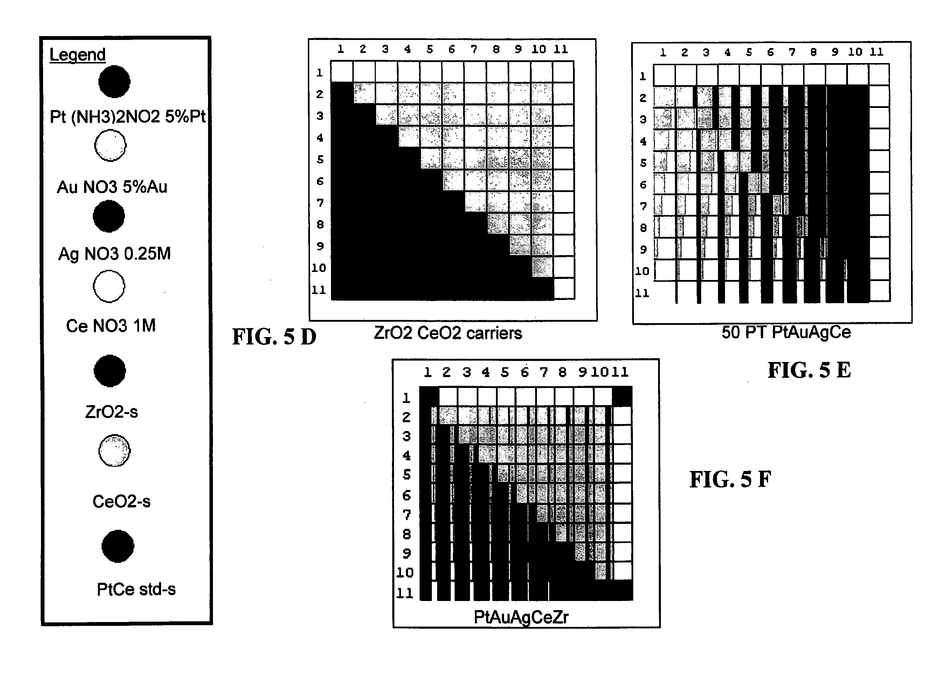

Figs. 5D through 5F are graphical representations of two fifty-point ternary libraries (*"bis* 50PT libraries") at various stages of preparation - including a Pt-Au-Ag/CeO₂ library (shown as the upper right ternary library of Fig. 5E) and a Pt-Au-Ce/ZrO₂ library (shown as the lower left ternary library of Fig. 5E). Note that the Pt-Au-Ag/CeO₂ library also includes binary-impregnated compositions - Pt-Au/CeO₂ binary catalysts (row 2) and Pt-Ag/CeO₂ (column 10). Likewise, the Pt-Au-Ce/ZrO₂ library includes binary-impregnated compositions - Pt-Ce/ZrO₂ (row 11) and Au-Ce/ZrO₂ (column 1). Briefly, the *bis* 50PT libraries were prepared by depositing CeO₂ and ZrO₂ supports onto respective portions of the test wafer as represented graphically in Fig. 5D. The supports were deposited onto the test wafer as a slurry in a liquid media using a liquid handling robot, and the test wafer was subsequently dried to form dried supports. Thereafter, salts of Pt, Au and Ag were impregnated onto the regions of the test wafer containing the CeO₂ supports in the various relative stoichiometries as represented in Fig. 5E (upper-right-hand library). Likewise, salts of Pt, Au and Ce were impregnated onto the regions of the test wafer containing the ZrO₂ supports in the various relative stoichiometries as represented in Fig. 5E (lower-left-hand library). Fig. 5F is a graphical representation of the composite library design, including the relative amount of catalyst support.

Specific methods of the invention for preparing catalytic materials are detailed in the following examples for selected libraries.

Performance benchmarks and reference experiments (*e.g.*, blanks) were also provided on each quartz catalyst test wafer as a basis for comparing the catalyst preparation methods of the libraries on the test wafer. The benchmark catalytic material formulations included a Pt/ zirconia catalyst standard with about 3 % Pt catalyst loading (by weight, relative to total weight of catalyst and support). The Pt/zirconia standard was typically synthesized by impregnating 3 µL of, for example, 1.0 % or 2.5 % by weight, Pt stock solution onto zirconia supports on the wafer prior to calcination and reduction pretreatment.

Typically wafers were calcined in air at a temperature ranging from 300 °C to 500 °C and/or reduced under a continuous flow of 5 % hydrogen at a temperature ranging from about 200 °C to about 500 °C (*e.g.,* 450 °C). Specific treatment protocols are described below with respect to each of the libraries of the examples.

For testing using the scanning mass spectrometer, the catalyst wafers were mounted on a wafer holder which provided movement in an XY plane. The sniffing/scanning probe of the scanning mass spectrometer moved in the Z direction (a direction normal to the XY plane of movement for the wafer holder), and approached in close proximity to the wafer to surround each independent catalyst element, deliver the feed gas and transmit the product gas stream from the catalyst surface to the quadrupole mass spectrometer. Each element was heated locally from the backside using a CO₂ laser, allowing for an accessible temperature range of about 200 °C to about 600 °C. The mass spectrometer monitored seven masses for hydrogen, methane, water, carbon monoxide, argon, carbon dioxide and krypton: 2, 16, 18, 28, 40, 44 and 84, respectively.

Catalyst compositions were tested at various reaction temperatures, typically including for example at about 300 °C, 350 °C and/or 400 °C and, additionally, usually for more active formulations, at 200 °C or 250 °C. The feed gas typically consisted of 51.6 % H₂, 7.4 % Kr, 7.4 % CO, 7.4 % CO₂ and 26.2 % H₂O. The H₂, CO, CO₂ and Kr internal standard are premixed in a single gas cylinder and then combined with the water feed. Treated water (18.1 mega-ohms-cm at 27.5 °C) produced by a Barnstead Nano Pure Ultra Water system was used, without degassing.

### Data Processing and Analysis

Data analysis was based on mass balance plots where CO conversion was plotted versus CO₂ production. The mass spectrometer signals were uncalibrated for CO and CO₂ but were based on Kr-normalized mass spectrometer signals. The software package SpotFire™ (sold by SpotFire, Inc. of Somerville, MA) was used for data visualization.

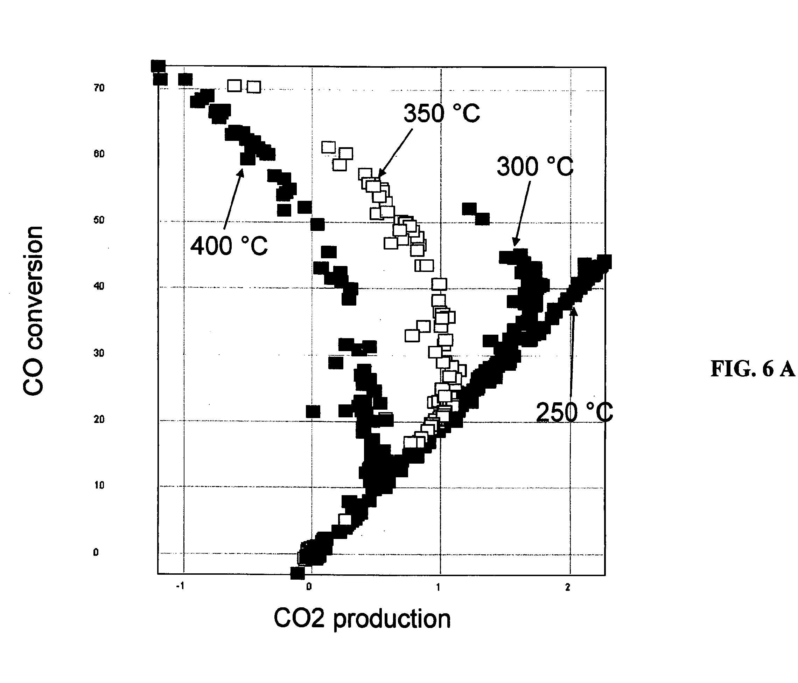

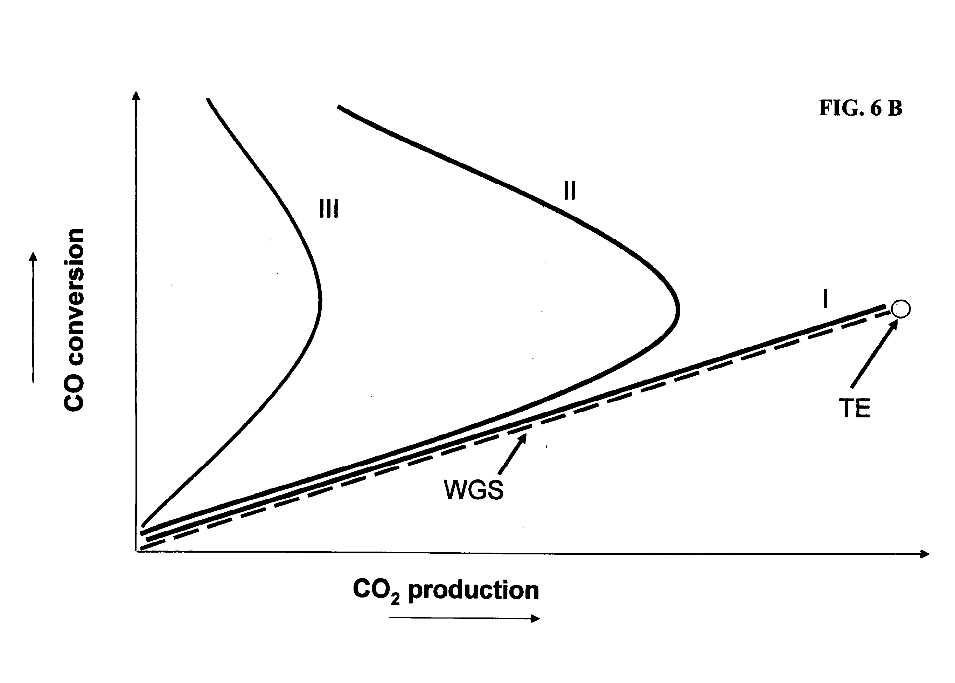

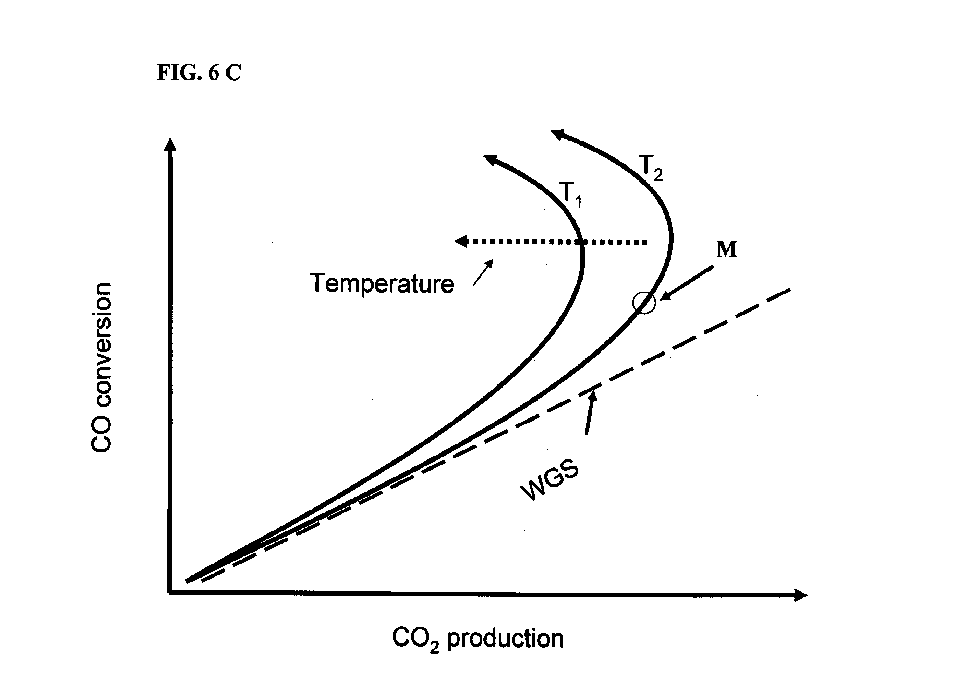

A representative plot of CO conversion versus CO₂ production for a WGS reaction is shown in Fig. 6A involving, for discussion purposes, two ternary catalyst systems - a Pt-Au-Ag/CeO₂ catalyst library and a Pt-Au-Ce/ZrO₂ catalyst library - as described above in connection with Figs. 5D through 5F. The catalyst compositions of these libraries were screened at four temperatures: 250 °C, 300 °C, 350 °C and 400 °C. With reference to the schematic diagram shown in Figs. 6B and 6C, active and highly selective WGS catalysts (*e.g.*, Line I of Fig. 6B) will approach a line defined by the mass balance for the water-gas-shift reaction (the "WGS diagonal") with minimal deviation, even at relatively high conversions (*i*.*e*., at CO conversions approaching the thermodynamic equilibrium conversion (point "TE" on Fig. 6B)). Highly active catalysts may begin to deviate from the WGS diagonal due to cross-over to the competing methanation reaction (point "M" on Fig. 6C). Catalyst compositions that exhibit such deviation may still, however, be useful WGS catalysts depending on the conversion level at which such deviation occurs. For example, catalysts that first deviate from the WGS diagonal at higher conversion levels (*e.g.,* Line II of Fig. 6B) can be employed as effective WGS catalysts by reducing the overall conversion (*e.g.,* by lowering catalyst loading or by increasing space velocity) to the operational point near the WGS diagonal. In contrast, catalysts that deviate from the WGS diagonal at low conversion levels (*e.g.*, Line III of Fig. 6B) will be relatively less effective as WGS catalysts, since they are unselective for the WGS reaction even at low conversions. Temperature affects the thermodynamic maximum CO conversion, and can affect the point of deviation from the mass-balance WGS diagonal as well as the overall shape of the deviating trajectory, since lower temperatures will generally reduce catalytic activity. For some compositions, lower temperatures will result in a more selective catalyst, demonstrated by a WGS trajectory that more closely approximates the WGS mass-balance diagonal. (*See* Fig. 6C). Referring again to Fig. 6A, it can be seen that the Pt-Au-Ag/CeO₂ and the Pt-Au-Ce/ZrO₂ catalyst compositions are active and selective WGS catalysts at each of the screened temperatures, and particularly at lower temperatures.

Generally, the compositions on a given wafer substrate were tested together in a common experimental run using the scanning mass spectrometer and the results were considered together. In this application, candidate catalyst preparation methods and techniques of a particular library on the substrate (*e.g.*, ternary or higher-order catalysts comprising three or more metal components) were considered as promising candidates for the preparation of active and selective commercial catalyst for the WGS reaction based on a comparison to the Pt/ZrO₂ standard composition included on that wafer. Specifically, libraries of catalytic preparation methods were deemed to be particularly preferred catalyst preparation methods if the results demonstrated that a meaningful number of catalyst compositions in that library compared favorably to the Pt/ZrO₂ standard composition included on the wafer substrate with respect to catalytic performance. In this context, a meaningful number of compositions was generally considered to be at least three of the tested compositions of a given library. Also in this context, favorable comparison means that the compositions had catalytic performance that was as good as or better than the standard on that wafer, considering factors such as conversion, selectivity and catalyst loading. All catalyst compositions of a given library were in many cases positively identified as active and selective WGS catalysts even in situations where only some of the library members compared favorably to the Pt/ZrO₂ standard, and other compositions within that library compared less than favorably to the Pt/ZrO₂ standard. In such situations, the basis for also including members of the library that compared somewhat less favorably to the standard is that these members in fact positively catalyzed the WGS reaction (*i.e.*, were effective as catalysts for this reaction). Additionally, it is noted that such compositions may be synthesized and/or tested under more optimally tuned conditions (*e.g.*, synthesis conditions, treatment conditions and/or testing conditions (*e.g.*, temperature)) than occurred during actual testing in the library format, and significantly, that the optimal conditions for the particular catalytic materials being tested may differ from the optimal conditions for the Pt/ZrO2 standard - such that the actual test conditions may have been closer to the optimal conditions for the standard than for some of the particular members. Therefore, it was specifically contemplated that optimization of synthesis, treatment and/or screening conditions, within the generally defined ranges of the invention as set forth herein, would result in even more active and selective WGS catalysts than what was demonstrated in the experiments supporting this invention. Hence, in view of the foregoing discussion, the entire range of compositions defined by each of the claimed compositions (*e.g.,* each three-component catalytic material, or each four-component catalytic material) was demonstrated as being effective for catalyzing the WGS reaction. Further optimization is considered, with various specific advantages associated with various specific catalyst compositions, depending on the desired or required commercial application of interest. Such optimization can be achieved, for example, using techniques and instruments such as those described in U.S. Patent No. 6,149,882, or those described in WO 01/66245 and its corresponding U.S. applications, U.S. Ser. No. 09/801,390, entitled "Parallel Flow Process Optimization Reactor" filed March 7, 2001 by Bergh *et al.,* and U.S. Ser. No. 09/801,389, entitled "Parallel Flow Reactor Having Variable Feed Composition" filed March 7, 2001 by Bergh *et al.,* each of which are incorporated herein by reference for all purposes.

Additionally, based on the results of screening of initial libraries, selective additional "focus" libraries were selectively prepared and tested to confirm the results of the initial library screening, and to further identify better performing catalyst preparation methods and techniques, in some cases under the same and/or different conditions. The test wafers for the focus libraries typically comprised about 225 different candidate catalyst compositions formed on a four-inch wafer substrate, with one or more libraries (*e.g*. associated ternary compositions A, B, C) formed on each test wafer. Again, the metal-containing components of a given library were typically combined in various relative ratios to form catalysts having stoichiometry ranging from about 0 % to about 100 % of each component, and for example, having stoichiometric increments of about 10 % or less, typically about 2 % or less (*e.g.*, for a "fifty-six point ternary"). Focus libraries are more generally discussed, for example, in WO 00/17413. Such focus libraries were evaluated according to the protocols described above for the initial libraries.

The raw residual gas analyzer ("rga") signal values generated by the mass spectrometer for the individual gases are uncalibrated and therefore different gases may not be directly compared. Methane data (mass 16) was also collected as a control. The signals are typically standardized by using the raw rga signal for krypton (mass 84) to remove the effect of gas flow rate variations. Thus, for each library element, the standardized signal is determined as, for example, sH₂O = raw H₂O/raw Kr; sCO = raw CO/raw Kr; sCO₂ = raw CO₂/raw Kr and so forth.

Blank or inlet concentrations are determined from the average of the standardized signals for all blank library elements, *i.e.* library elements for which the composition contains at most only support. For example, b_{avg} H₂O = average sH₂O for all blank elements in the library; b_{avg} CO = average sCO for all blank elements in the library; and so forth.

Conversion percentages are calculated using the blank averages to estimate the input level (*e.g.*, b_{avg} CO) and the standardized signal (*e.g.,* sCO) as the output for each library element of interest. Thus, for each library element, CO_{conversion} = 100 x (b_{avg} CO - sCO)/b_{avg} CO and H₂O_{conversion} = 100 x (b_{avg} H₂O - sH₂O)/b_{avg} H₂O.

The carbon monoxide (CO) to carbon dioxide (CO₂) selectivity is estimated by dividing the amount of CO₂ produced (sCO₂ - b_{avg} CO₂) by the amount of CO consumed (b_{avg} CO - sCO). The CO₂ and CO signals are not directly comparable because the rga signals are uncalibrated. However, an empirical conversion constant (0.6 CO₂ units = 1 CO unit) has been derived, based on the behavior of highly selective standard catalyst compositions. The selectivity of the highly selective standard catalyst compositions approach 100 % selectivity at low conversion rates. Therefore, for each library element, estimated CO to CO₂ selectivity = 100 x 0.6 x (sCO₂ - b_{avg} CO₂)/(b_{avg} CO - sCO). Low CO consumption rates can produce highly variable results, and thus the reproducibility of CO₂ selectivity values is maintained by artificially limiting the CO₂ selectivity to a range of 0 % to 140 %.

The following examples are representative of the screening of libraries that lead to identification of the particularly claimed inventions herein.

### Example 1:

A 4" quartz wafer was pre-coated with a ZrO₂ (XZ 16052) carrier by slurry dispensing 3 µL (1.5 g of ZrO₂ in 4 mL of EG/H₂O/MEO, 32.5:30:37.5) to each element of a 15x15 square on the wafer). The wafer was then oven-dried at 70 °C for 12 minutes.

Six internal standards were synthesized by Cavro spotting 3 µL of a Pt(NH₃)₂(NO₂)₂ (2.5 % Pt) stock solution into the corresponding first row/last column positions. The wafer was impregnated with uniform layers of each of the following Pt-precursors: Pt(NH₃)₂(NO₂)₂ Na₂Pt(OH)₆ and (NMe₄)₂Pt(OH)₆ by Cavro dispensing from the corresponding stock solution vials to the wafer (dispense volume of 2.5 µL) resulting in three 5 x 15 rectangles on the wafer.

The wafer was dried for 4 hours at room temperature and the upper half of the wafer was co-impregnated with following metal gradients from top to bottom: NaOH (1M solution), NaHCO₃ (1M), NaOH (0.5M) with a reverse gradient from bottom to top of LiOH (0.5M), NaOH (0.5M) with a reverse gradient from bottom to top of Li-formate (0.5M) and ammonium vanadium(+5) formate (0.25M) by Cavro dispensing from the corresponding stock solution vials to a microtiter plate and diluting with distilled water. A replica transfer of the microtiter plate pattern to the wafer followed (2.5 µL dispense volume per well), resulting in three 5 x 8 point rectangles on the wafer.

The wafer was dried for 4 hours at room temperature and then coated by Cavro dispensing with a ternary metal gradient from top to bottom of NaOH (1M) and diluting with distilled water. A replica transfer of the microtiter plate pattern to the wafer followed (2.5 µL dispense volume per well), resulting in three 8 point gradients on the wafer.

The wafer was dried overnight at room temperature and then calcined in air at 350 °C for 2 hours. The lower half of the wafer was post-impregnated with following metal gradients from top to bottom: NaOH (1M), NaHCO₃ (1M), NaOH (0.5M) with a reverse gradient from bottom to top of LiOH (0.5M), NaOH (0.5M) with a reverse gradient from bottom to top of Li-formate (0.5M) and ammonium vanadium(+5) formate (0.25M), by Cavro dispensing from the corresponding stock solution vials to a microtiter plate and diluting with distilled water. A replica transfer of the microtiter plate pattern to the wafer followed (2.5 µL dispense volume per well), resulting in three 5 x 7 point rectangles on the wafer.

The wafer was dried for 4 hours at room temperature before being impregnated by Cavro dispensing with a ternary metal gradient from top to bottom of NaOH (1M) and diluting with distilled water. A replica transfer of the microtiter plate pattern to the wafer followed (2.5 µL dispense volume per well), resulting in three 7 point gradients on the wafer.

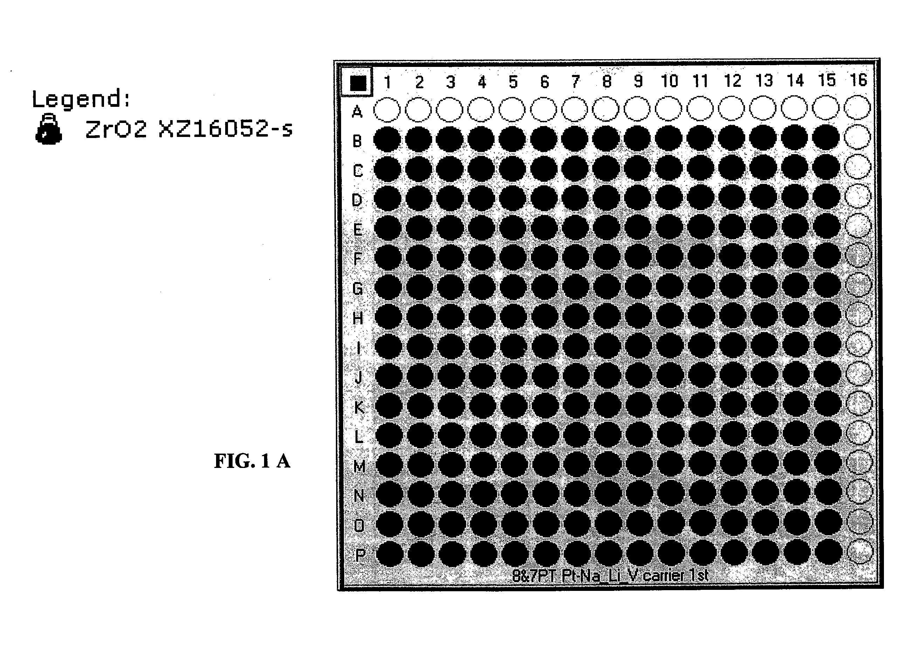

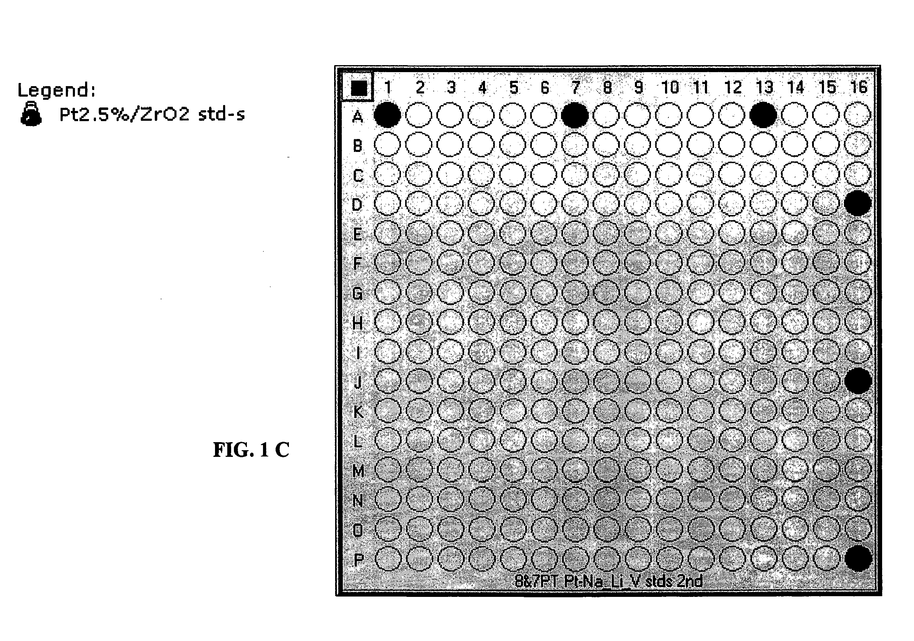

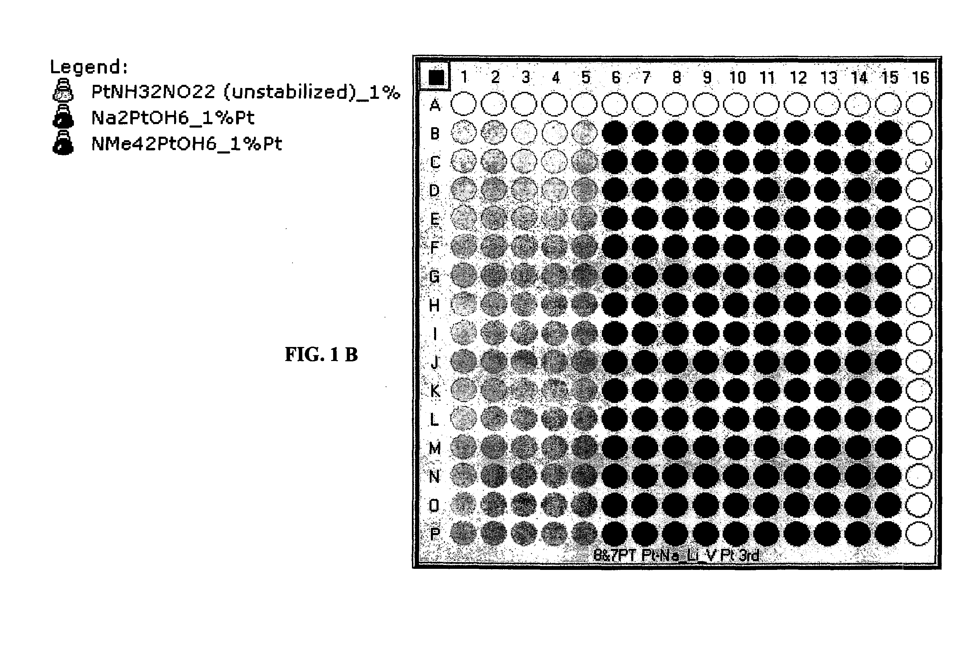

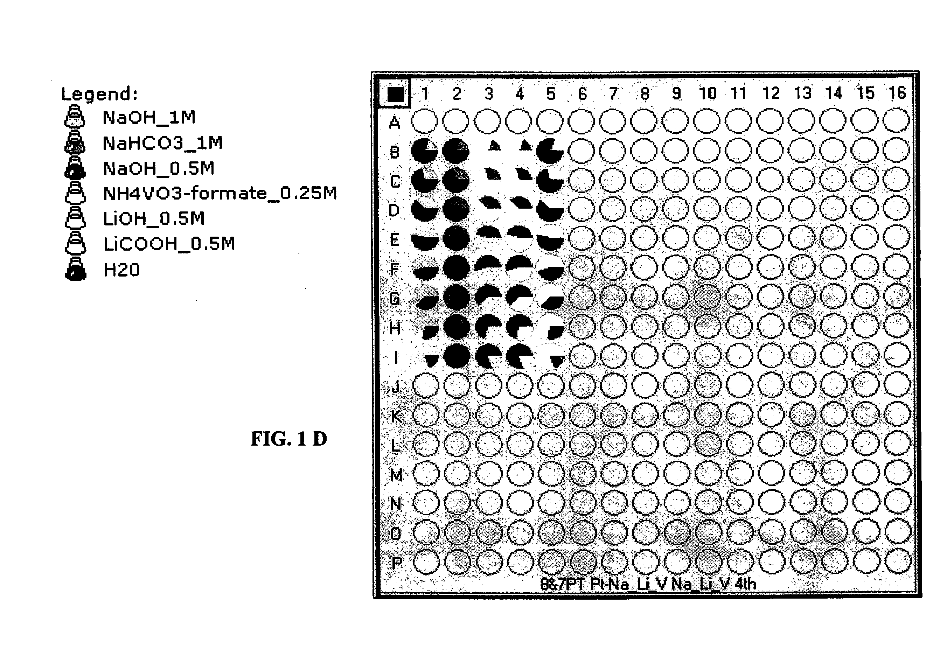

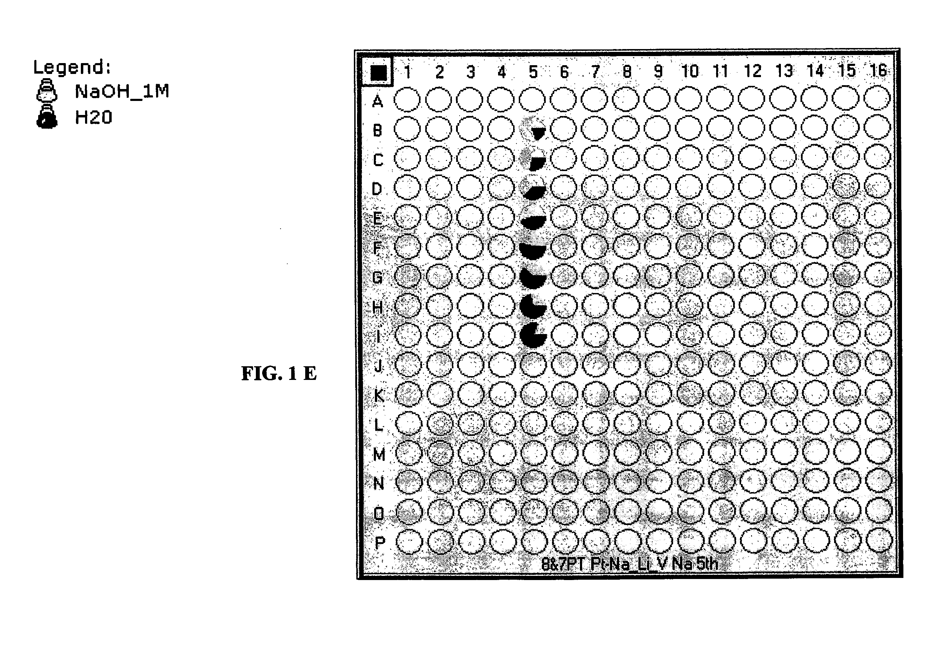

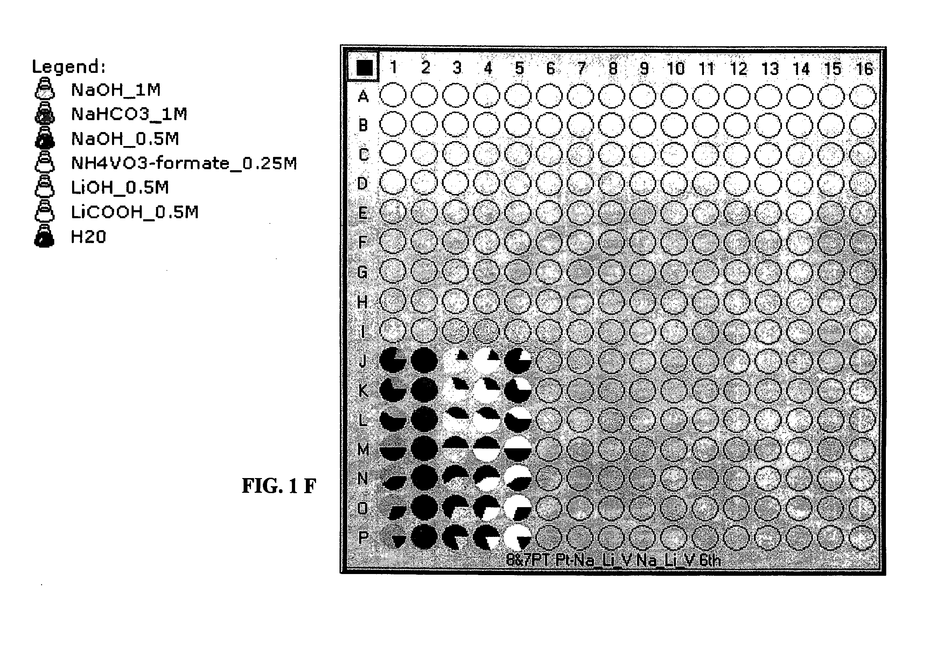

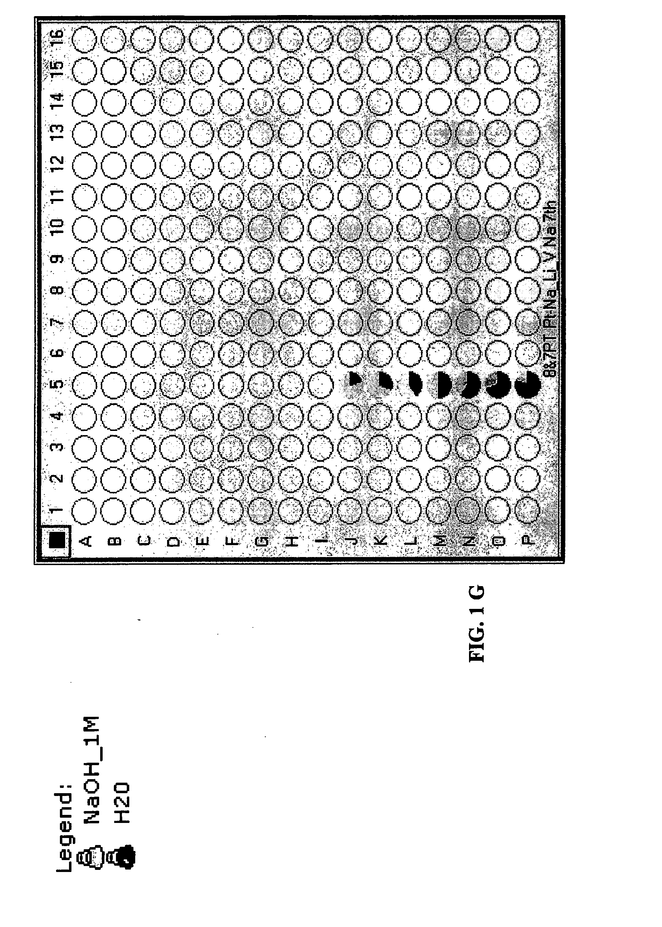

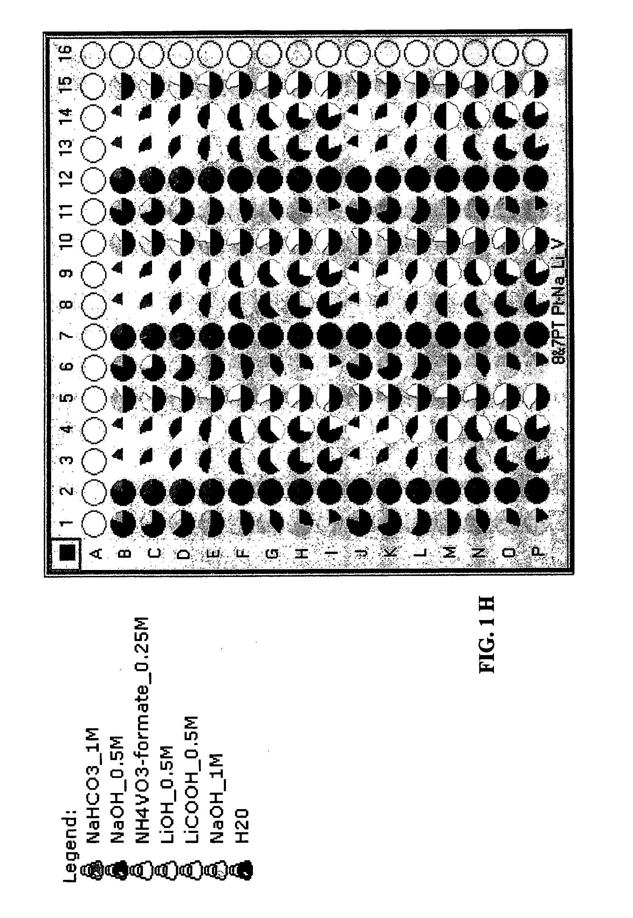

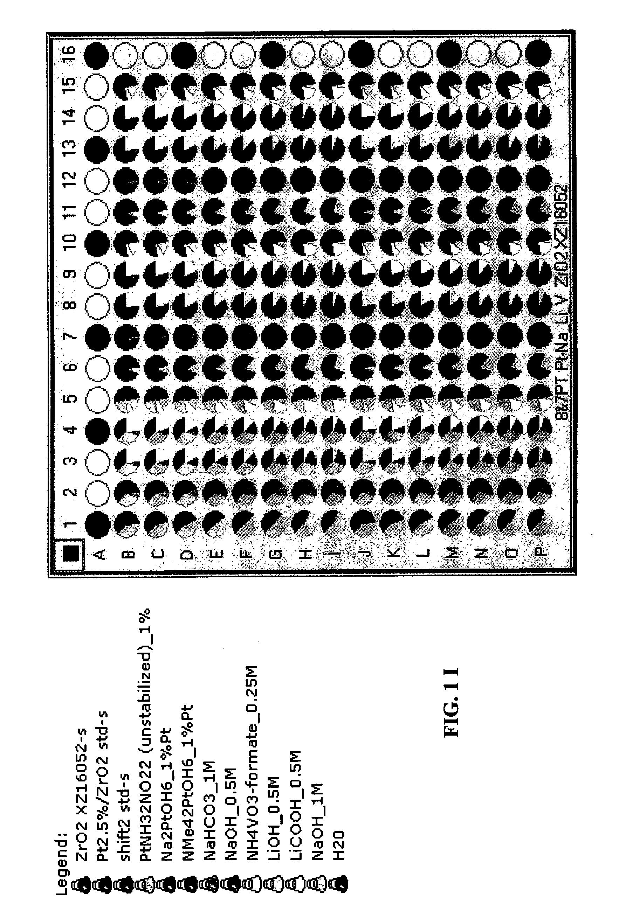

The wafer was dried for 3 hours at room temperature and calcined in air at 350 °C for 2 hours followed by reduction with 5 % H₂/N₂ at 250 °C for 2 hours. Figs. 1A-1I show the preparative process for this test wafer.

Results showed the benefit of the interaction between Na and Pt and the effect of order of addition.

### Example 2: Preparation of a 0.25M Ammonium Vanadium(+5) Formate Solution

A 0.25M V solution was prepared by dissolving 292 mg of ammonium vanadium oxide (NH₄VO₃) in 9.87 mL of H₂O. Five drops of 25 % NT₄OH and 7 drops of formic acid 98 % were added, resulting in a clear orange 0.25M ammonium vanadium(+5) formate solution.

The solution was found to be stable (stays clear and orange without any indication of vanadium reduction as opposed to lactic and citric acid as stabilizers) for at least 1 week.

### Example 3:

A 4" quartz wafer was pre-coated with a ZrO₂ (XZ16052) carrier by slurry dispensing 3 µL (1.5 g of ZrO₂ in 4 mL of EG/H₂O/MEO, 32.5:30:37.5) to each element of a 15x15 square on the wafer). The wafer was then oven-dried at 70 °C for 12 minutes.

Six internal standards were synthesized by Cavro spotting 3 µL a of Pt(NH₃)₂(NO₂)₂ (2.5 % Pt) stock solution into the corresponding first row/last column positions. The wafer was then impregnated with an uniform Pt layer by Cavro dispensing into columns 2 to 15 (2.5 µL per well) a stock solution of Pt(NH₃)₂(NO₂)₂ (1 % Pt), resulting in a 14 x 15 rectangle on the wafer.

The non-impregnated (Pt-free) first column was coated with two 0.75M Co(+2)-nitrate gradients (8- and 7- point gradients) from top to bottom by Cavro dispensing from the corresponding stock solution vial to a microtiter plate and diluting with distilled water. A replica transfer of the microtiter plate pattern to the wafer followed (2.5 µl dispense volume per well), resulting in a 15 point column on the wafer.

The wafer was dried for 2 hours at room temperature and was then impregnated by with binary metal layer gradients of Co(+2)-nitrate (0.75M) from top to bottom by Cavro dispensing from the corresponding stock solution vial to the microtiter plate and diluting with distilled water. A replica transfer of the microtiter plate pattern to the wafer followed (2.5 µl dispense volume per well), resulting in a 6x15 point rectangle on the wafer.

A 0.4M Co(+3) solution was prepared by dissolving 1.39 g of Co(NH₃)₆(NO₃)₃ in 9.2 mL of H₂O. After complete dissolution with heating to about 100 °C, the hexaammine Co(III) nitrate was impregnated on the wafer as an uniform layer to columns 9 to 15 by hot Cavro dispensing from the corresponding stock solution vial to the wafer, resulting in a 7 x 15 rectangle on the wafer.

The wafer was dried for 4 hours at room temperature. The wafer was then covered with the following ternary metal layer gradients from bottom to top: HReO₄ (0.1M), ammonium vanadium(+5) formate (0.25M), H₂MoO₄ (0.25M), Ce(NO₃)₃ (0.25M), NaAu(OH)₄ (0.1M) and Co(NO₃)₂ (0.75M), by Cavro dispensing from the corresponding stock solution vials to the microtiter plate and diluting with distilled water. A replica transfer of the microtiter plate pattern to the wafer followed (2.5 µl dispense volume per well), resulting in 5 x 15 and 6 x 15 point rectangles on the wafer.

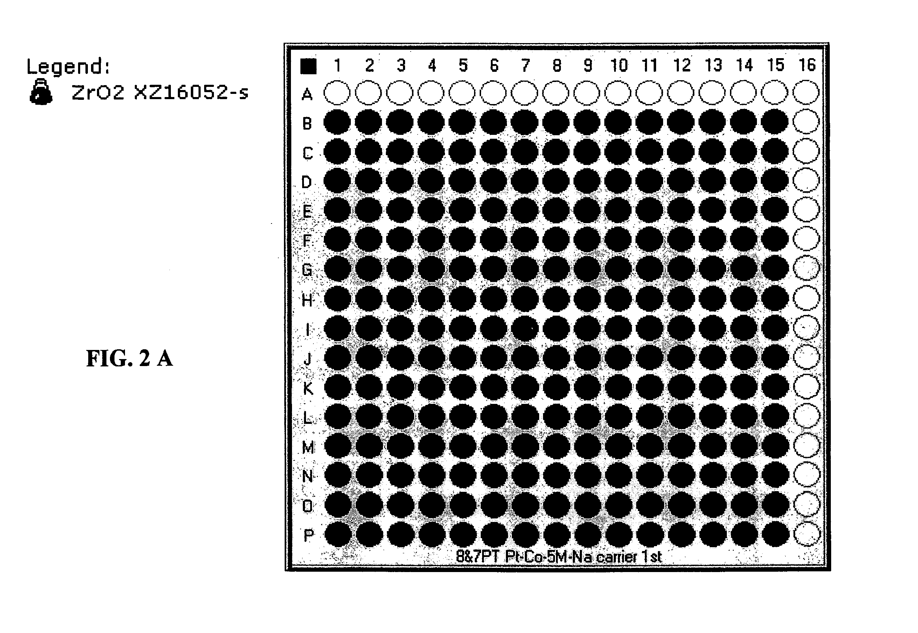

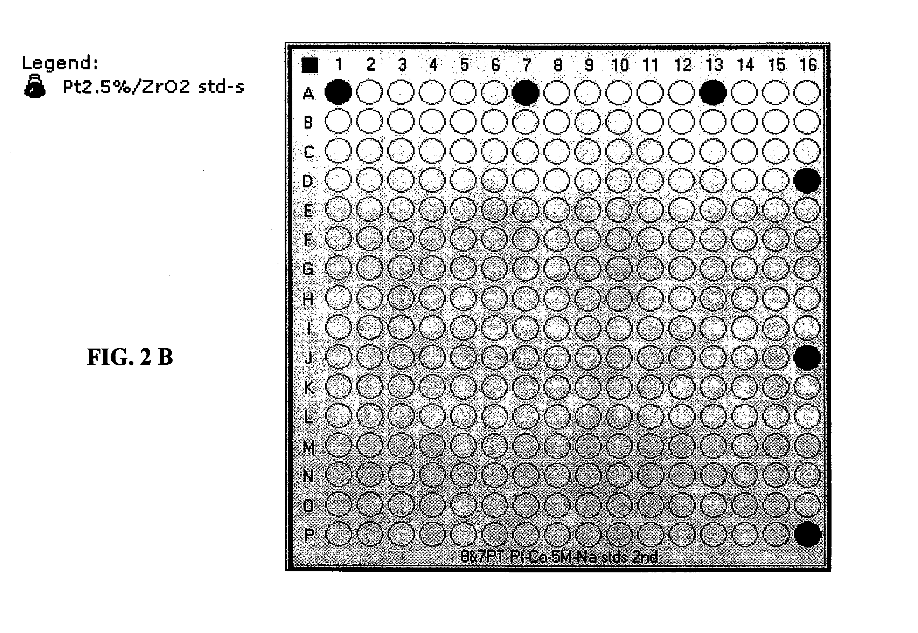

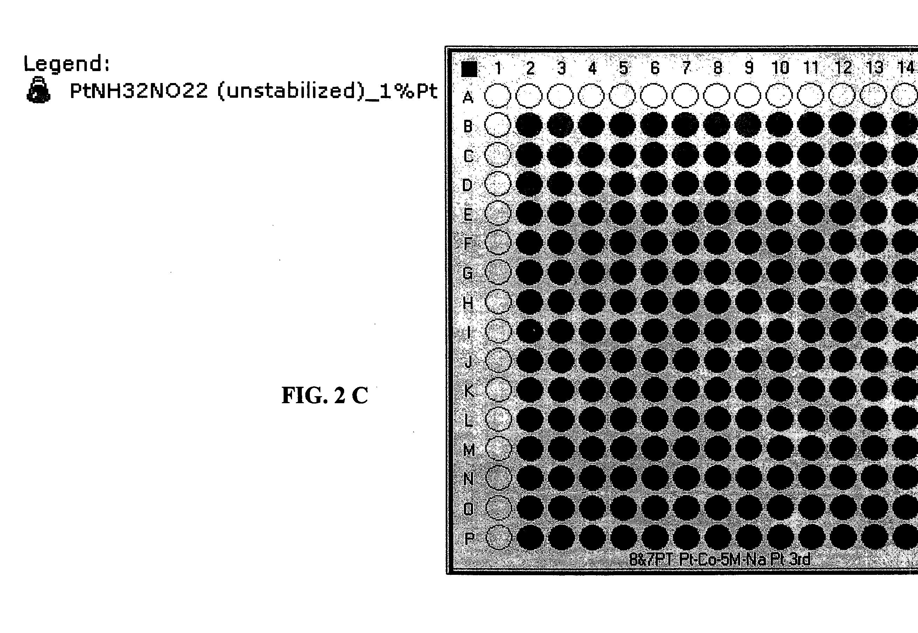

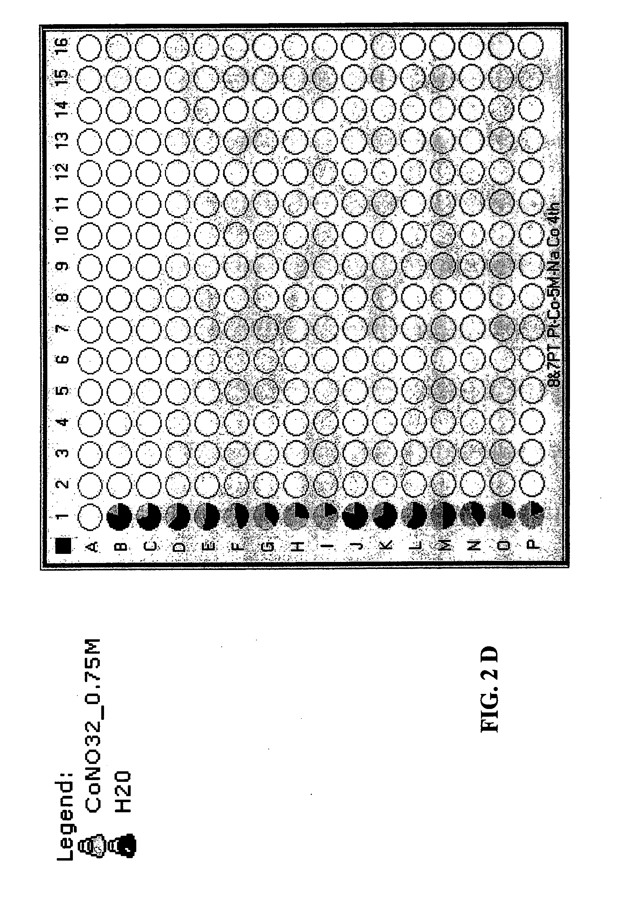

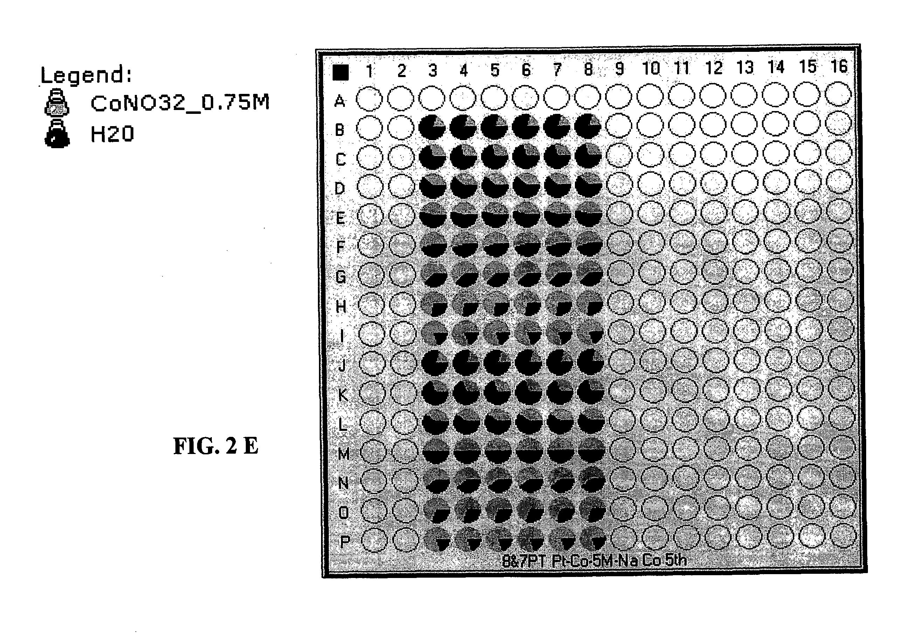

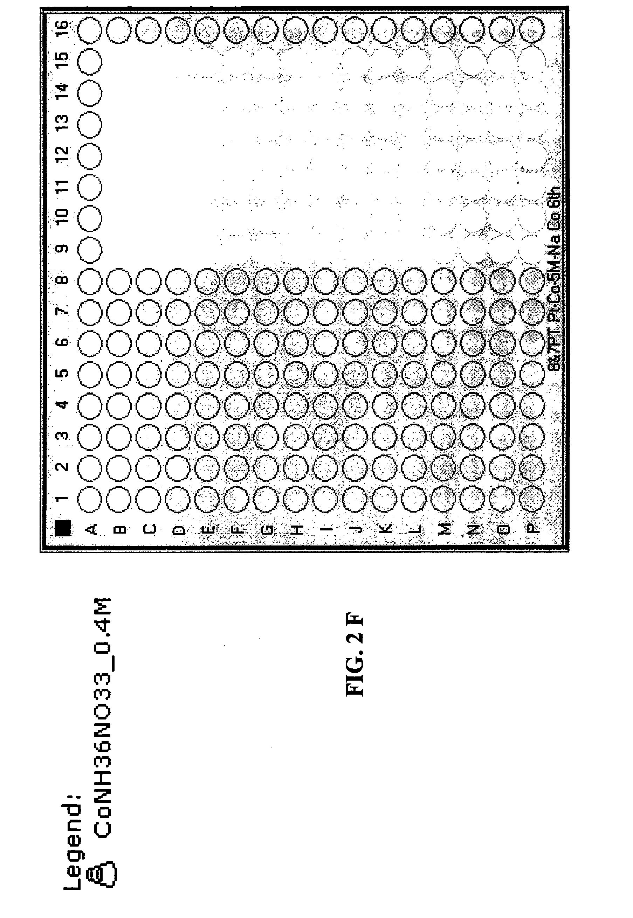

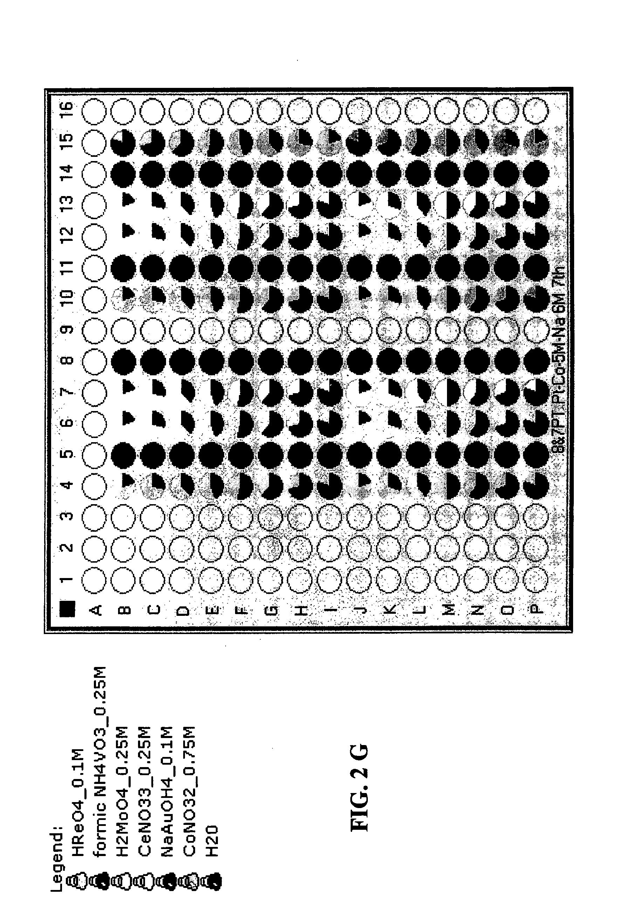

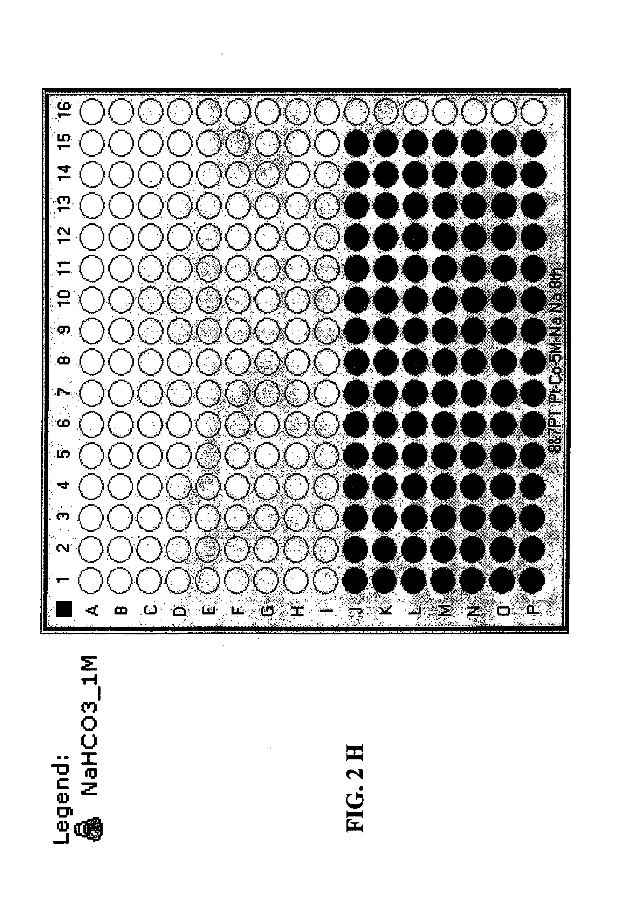

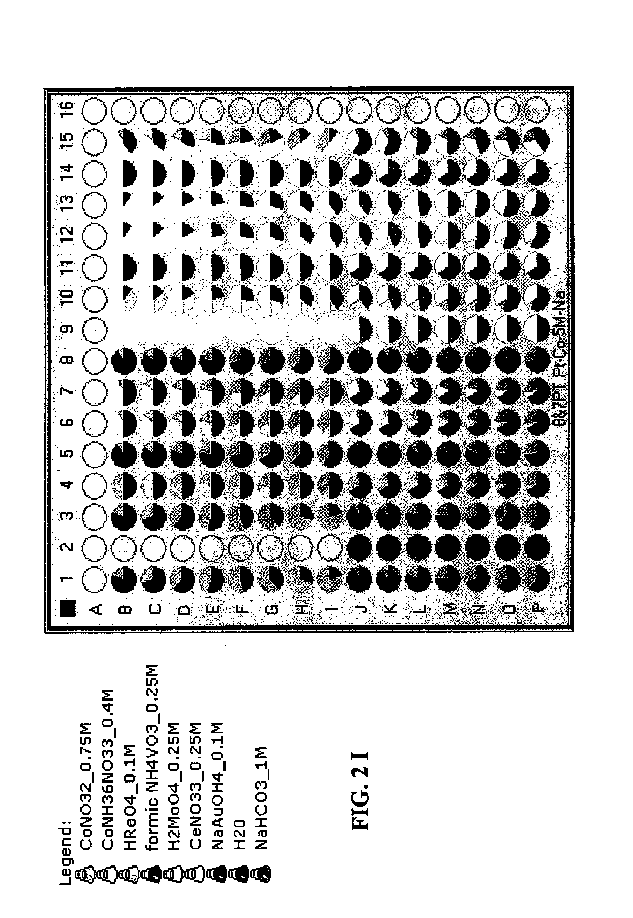

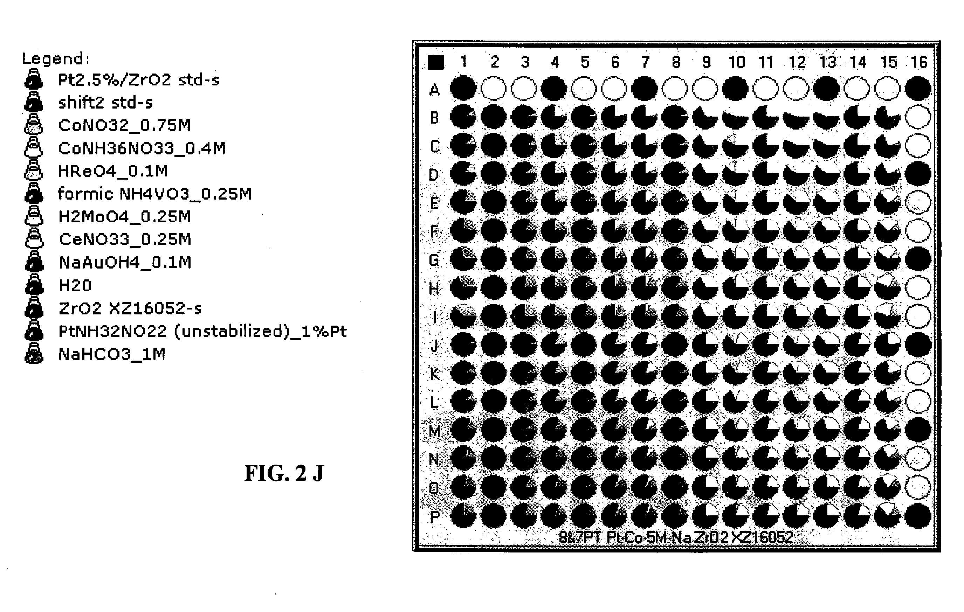

The wafer was dried overnight drying step at room temperature and was then calcined in air at 300 °C for 2 hours and post-impregnated with an uniform layer of NaHCO₃ (1M) to the lower half of the wafer (7 x 15 point rectangle) by Cavro dispensing from the respective stock solution vial to the wafer. The wafer was then oven-dried at 110 °C for 4 hours. Figs. 2A - 2J show the preparative process for this test wafer.

The library was screened and *in-situ* reduced in SMS for WGS activity with a H₂/CO/CO₂/H₂O mixed feed at 200 °C.

### Example 4:

A 4" quartz wafer was precoated with a γ-Al₂O₃ (Catalox Sba-150) carrier by slurry dispensing 3 µL (1 g of γ-Al₂O₃ in 4 mL of ethylene glycol ("EG")/H₂O, 50:50) to each element of a 15x15 square on the wafer. The wafer was then oven-dried at 70 °C for 12 minutes.

Six internal standards were synthesized by Cavro spotting 3 µL of a Pt(NH₃)₂(NO₂)₂ (2.5 % Pt) stock solution into the corresponding first row/last column positions. The wafer was impregnated with a uniform Pt layer by dispensing into columns C 1 to C5 (2.5 µL per well) a stock solution of Na₂Pt(OH)₆ (from powder, 1 % Pt) to the wafer.

Columns C6 to C15 of the wafer were then impregnated with following metal-gradients from top to bottom: ZrO(NO₃)₂, La(NO₃)₃, Y(NO₃)₃, Ce(NO₃)₃, H₂MoO₄, Fe(NO₃)₃, Co(NO₃)₂, ZrO(OAc)₂, Mn(NO₃)₂ and KRuO₄ by Cavro dispensing from the respective stock solution vials to a microtiter plate and diluted with distilled water. A replica transfer of the microtiter plate pattern to the wafer followed (2.5 µL, dispense volume per well), resulting in a 10 x 15 point rectangle on the wafer (10 columns with metal gradients).

The wafer was dried for 3.5 hours at room temperature and then coated with base gradients (0.5M, opposing gradients) including CsOH-NaOH, LiOH-NaOH, RbOH-NaOH and KOH-NaOH separately in each of the first four columns, respectively, and NaOH in columns 5 to 15 (1M base with a gradient from bottom to top) by Cavro dispensing from the corresponding stock solution vials to the microtiter plate and diluting with distilled water. A replica transfer of the microtiter plate pattern to the wafer followed (2.5 µL dispense volume per well), resulting in a 15 x 15 point rectangle on the wafer (15 columns with base gradients). The wafer was dried overnight at room temperature and oven-dried for 2 minutes.

The final impregnation was a uniform dispensing (2.5 µL dispense volume per well, resulting a 10 x 15 point square) from a stock solution vial of Na₂Pt(OH)₆ (from powder, 1 % Pt) to the wafer (C6-C 15) as a ternary layer.

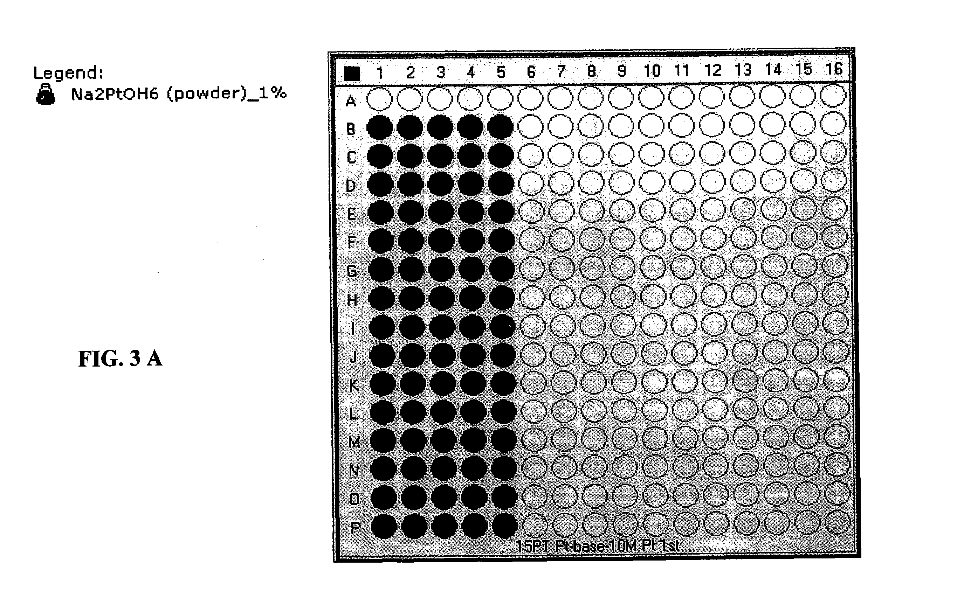

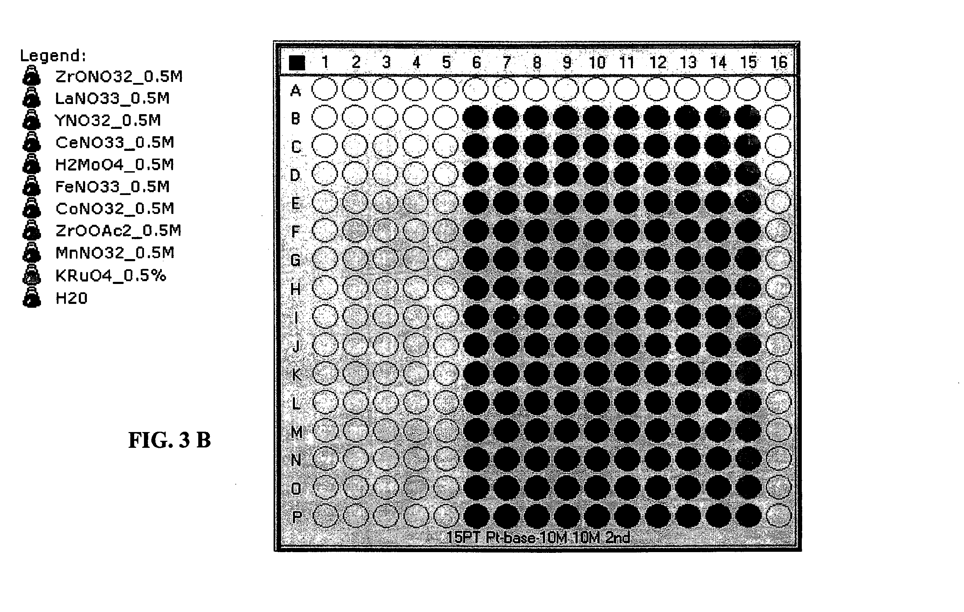

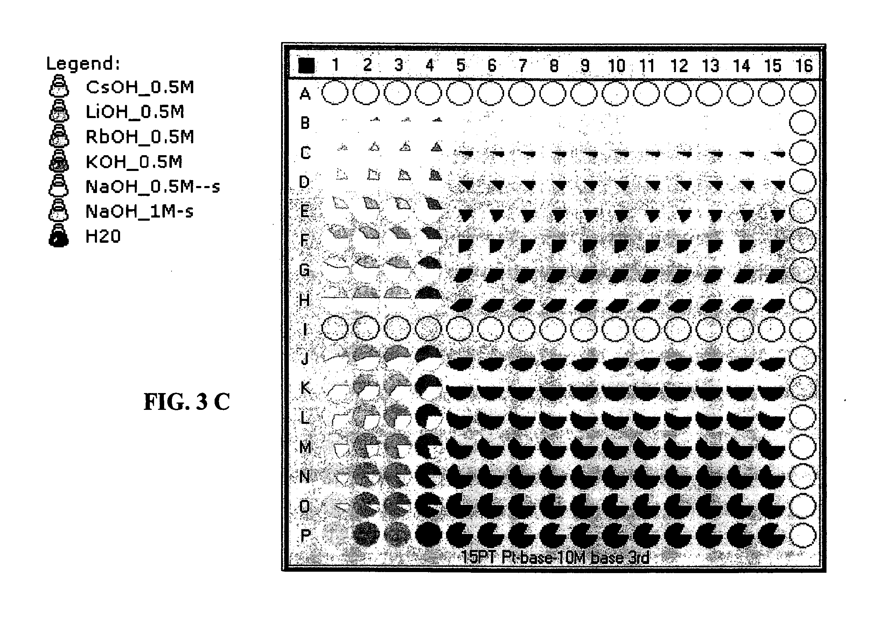

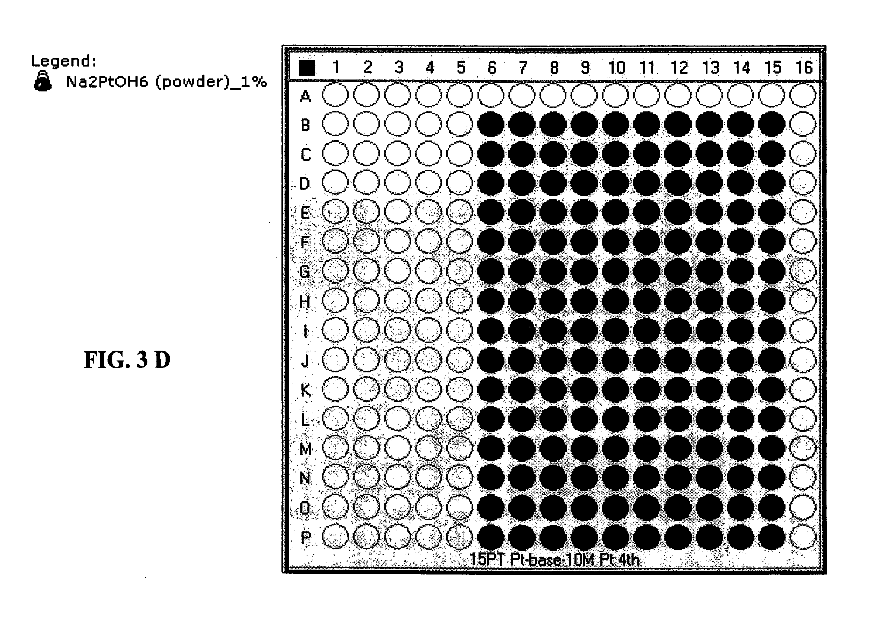

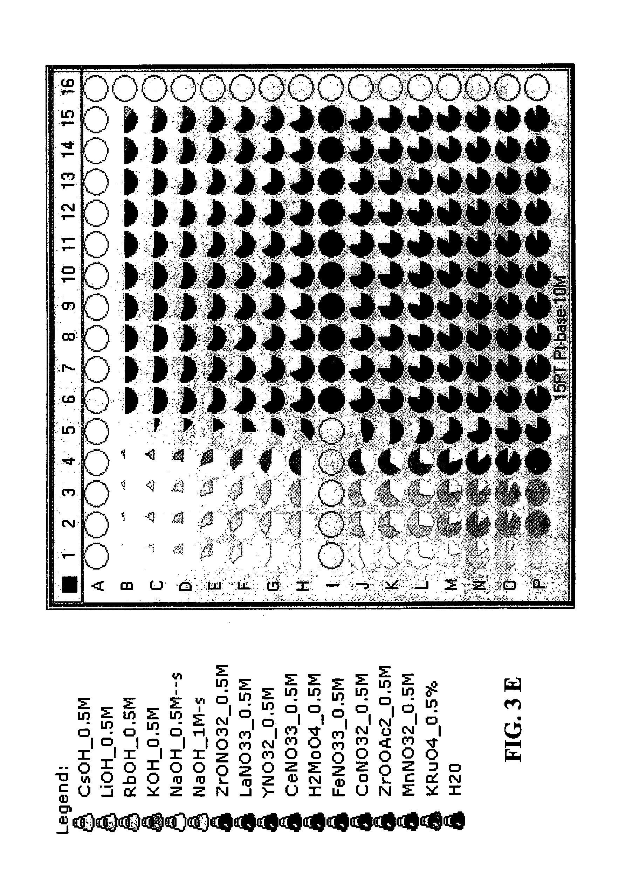

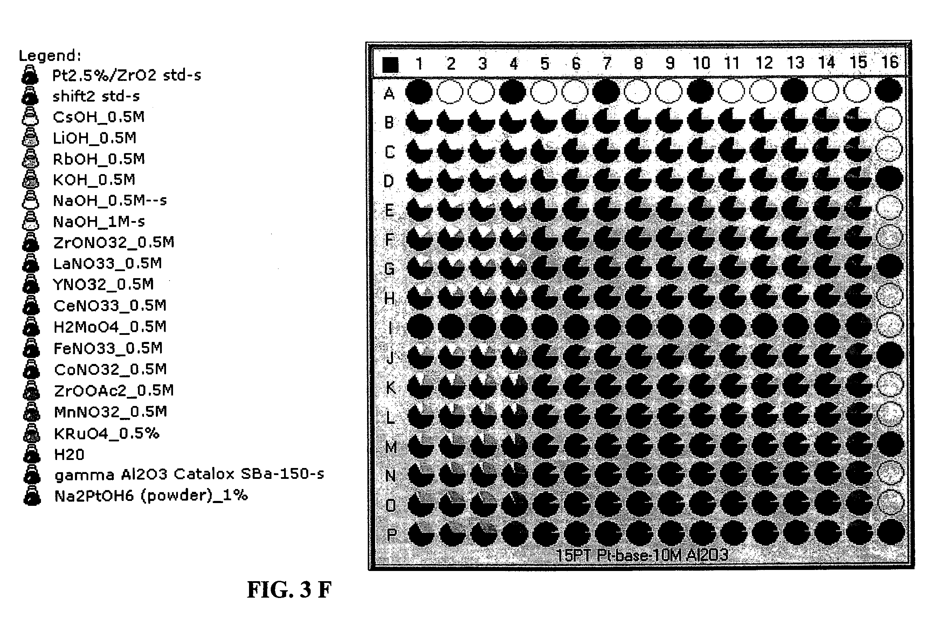

The wafer was dried at room temperature for 4 hours and then calcined in air at 450 °C for 2 hours followed by reduction with 5 % H₂/N₂ at 250 °C for 2 hours. Commercial catalyst was slurried into 5 positions of the first row and last column as an external standard (3 µL). See Figs. 3A-3F .

The library was screened in an SMS for WGS activity with a H₂/CO/CO₂/H₂O mixed feed at 200 °C, 230 °C and 260 °C.

This experiment demonstrated active and selective catalysts with a synergistic effect for the NaOH-LiOH mixture observed. It was also observed that a Pt-first and Na-last sequence represented the optimal order of addition for otherwise undoped systems. In the presence of acidic dopant precursors (*e.g.* Co, Fe, Ce nitrate, *etc*.) it was observed that it was preferable for the Pt (basic) precursor to be separated from the acidic dopant layer by the basic NaOH layer ( i.e. Co-first, Na-second and Pt-last; or Pt-first, Na-second and Co-last).

### Example 5:

A 4" quartz wafer was precoated with zirconia carrier by slurry dispensing (ZrO₂ XZ16052, 3 µL dispense volume, 1.5g ZrO₂/ 4 mL EG/H₂O/MEO 32.5 : 30 : 37.5 mixture). The wafer was oven dried at 70 °C for 12 minutes.

Six standards were synthesized by Cavro dispensing 3 µL Pt(NH₃)₂(NO₂)₂ solution (2.5% Pt) into the corresponding 1st row/last column positions.

PtCl₄ solution (1% Pt, 2.5 µl dispense volume) was directly Cavro dispensed from the stock solution vial onto the wafer (uniform, flat primer Pt layer, no gradient). The wafer was dried at room temperature for 1 hour, then at 110 °C for 3 hours, then at room temperature overnight.

(NH₄)₂Co(OX)₂ (OX = oxalate) in NH₃ was manually dispensed by pipette to column 1, rows 10-16 (2.5 µL dispense volume, uniform, flat Co layer).

Seven-point and 8-point metal gradients (from top to bottom) of 28 metal precursor solutions were premixed in a microtiter plate by Cavro dispensing from stock solution vials to microtiter plate and dilution with distilled water (100 µl volume/well; 0.25M metal stock solutions, except for Au and Ru, see below:

| | |
|---|---|
| C2, R2-9: | Co(II) acetate |
| C2, R10-16: | Ce(III) nitrate |
| C3, R2-9: | Ce(IV) nitrate |
| C3; R10-16: | (NH₄)₂Ce(NO₃)₆ |
| C4, R2-9: | Ce(III) acetate |
| C4, R10-16: | formic acid ammonium salt NH₄OOCH |
| C5, R2-9: | NH₄NO₃ |
| C5; R10-16: | (NH₄)₂CO₃ |
| C6, R2-9: | ammonium carbamate NH₄CO₂NH₂ |
| C6, R10-16: | NMe₄OH |
| C7, R2-9: | formic acid HCOOH |
| C7, R10-16: | acetic acid CH₃COOH |
| C8, R2-9: | oxamic acid H₂N(O)C-COOH |
| C8, R10-16: | oxalic acid HOOC-COOH |
| C9, R2-9: | H₃PO₄ |
| C9, R10-16: | H₂MoO₄ |
| C10,R2-9: | (NH₄)₂Fe(OX)₃ |
| C10:R10-16: | Fe(II) acetate |
| C1,R2-9: | Fe₂OX₃ |
| C11,R10-16: | La acetate |
| C12,R2-9: | Eu acetate |
| C12,R10-16: | V(OX)₂ vanadyl oxalate |
| C13,R2-9: | NH₄VO₃ in 0.3M citric acid |
| C13,R10-16: | Ge oxalate |
| C 14,R2-9: | Ru nitrosyl acetate RuNO(OAc)₃ 0.5% Ru |
| C14,R10-16: | NaHCO₃ |
| C15,R2-9: | NaAu(OH)₄ in 0.25M NaOH 0.1M Au |
| C15,R10-16: | SnC₄H₄O₆ Sn tartrate in NMe₄OH |

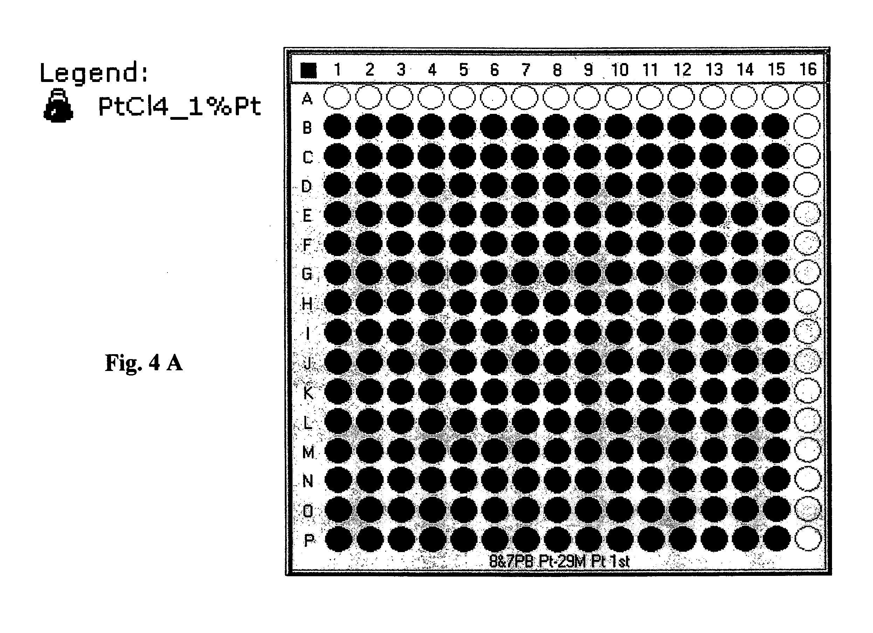

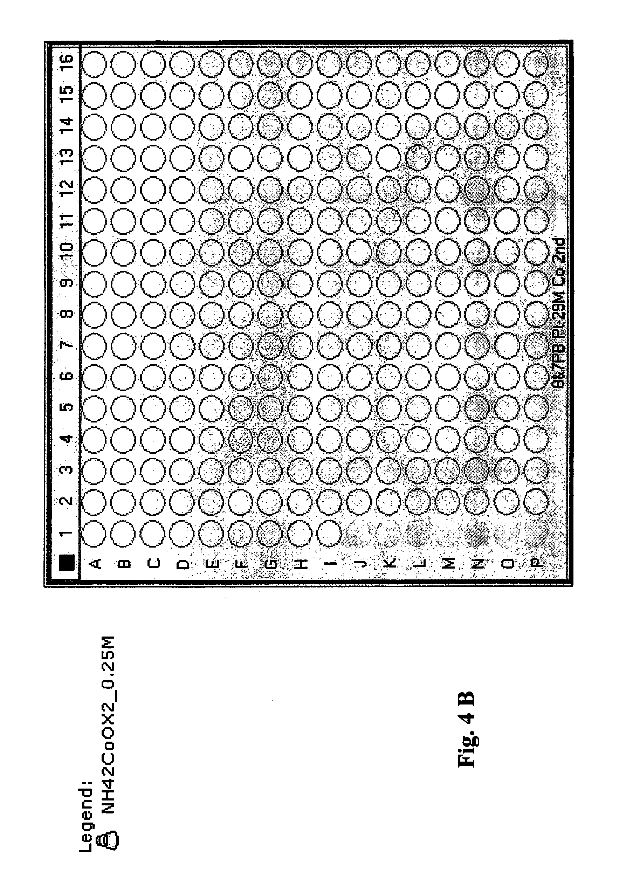

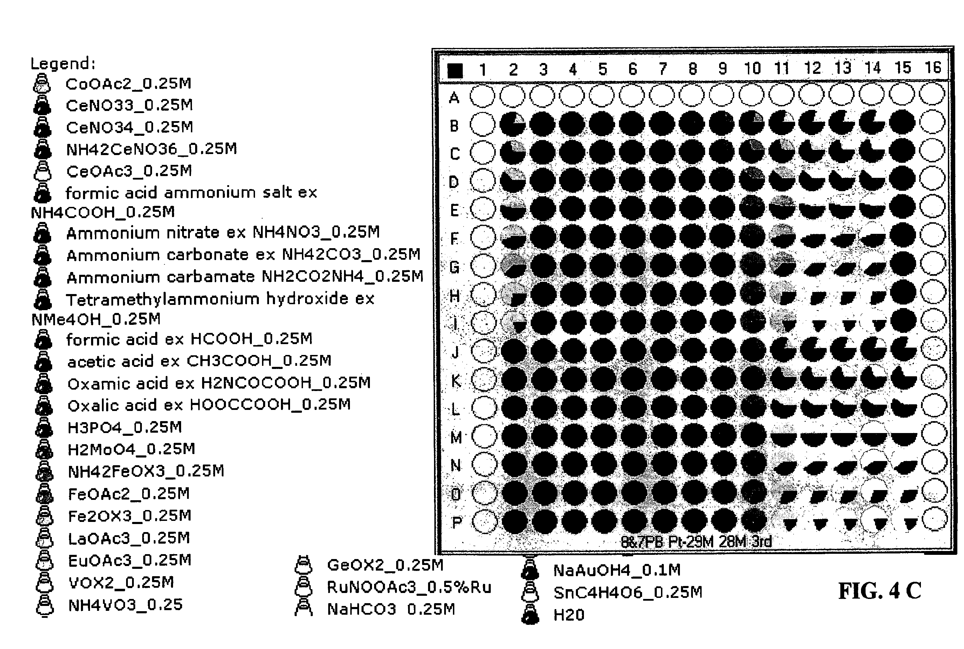

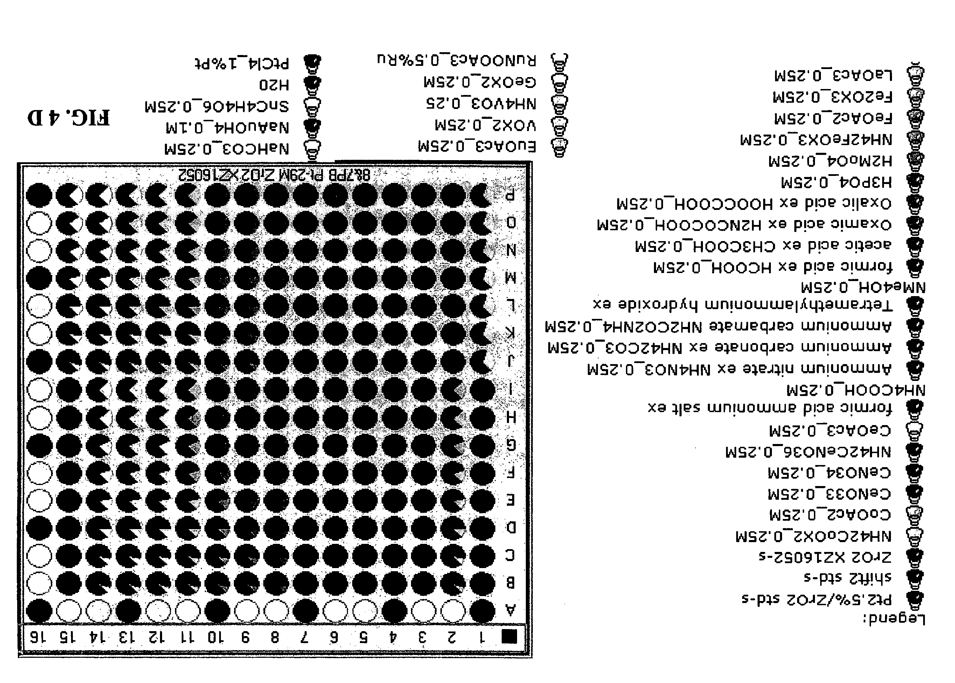

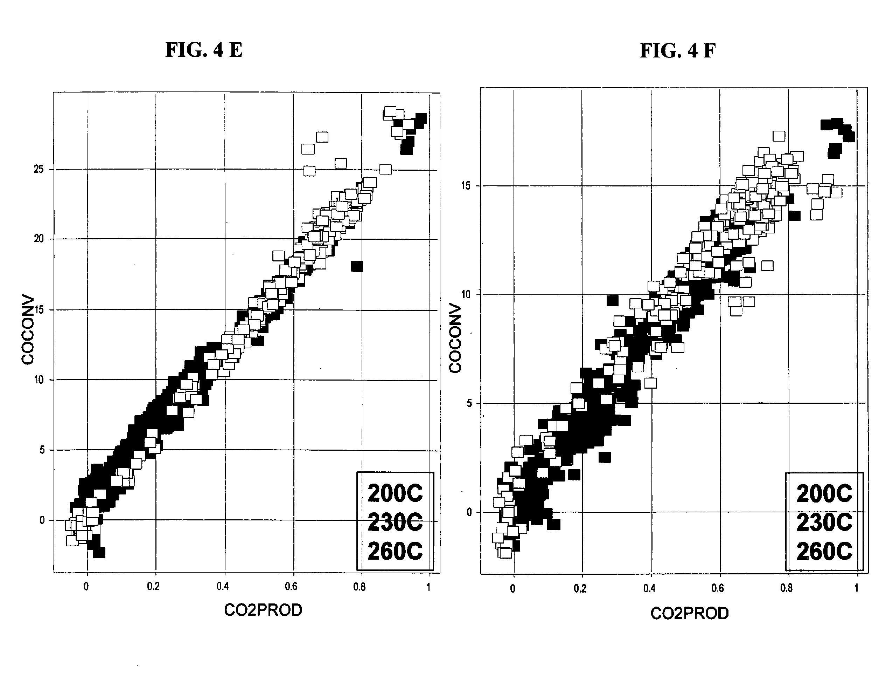

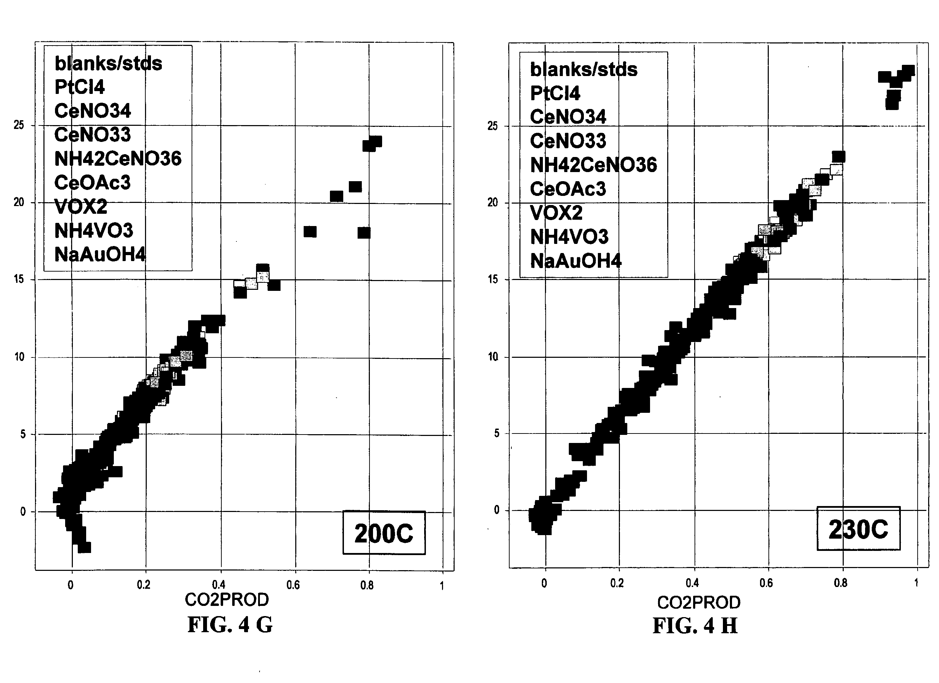

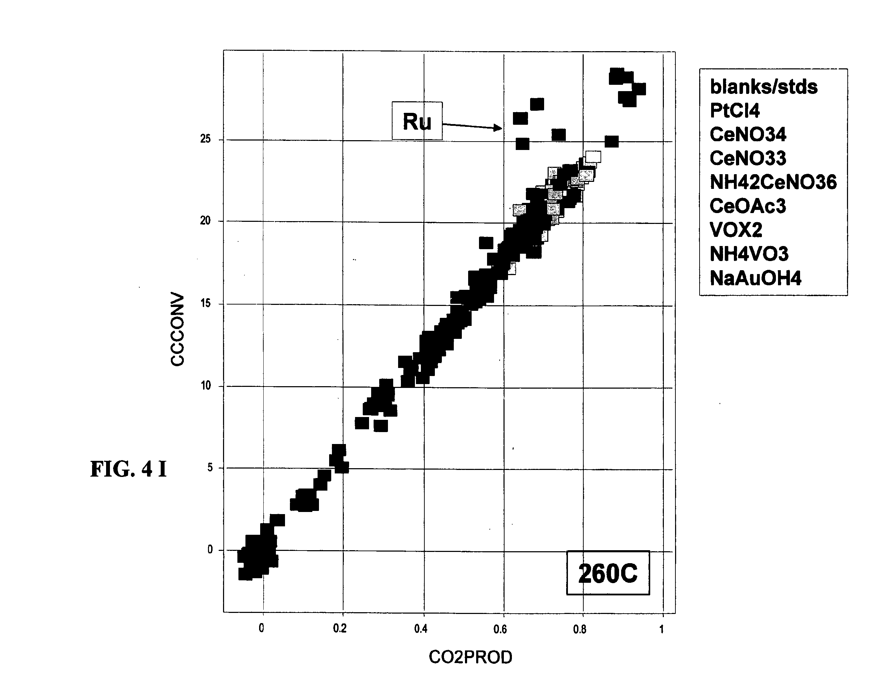

The wafer was dried at room temperature for 4 hours, then calcined at 400 °C for 2 hours in air, then reduced in 5%H₂/N₂ at 200 °C for 2 hours. Figs. 4A - 4D outline graphically the preparative steps.

The wafer was screened by SMS for WGS activity at 200 °C, 230 °C, 260 °C, and PtCl₄ was identified as an active Pt precursor. Figs. 4E - 4I present the CO conversion versus CO production results at the three above temperatures.

## Claims

1. A method of preparing a platinum- and sodium-containing catalyst comprising:
impregnating all non-platinum- and non-sodium-containing components of the catalyst composition onto a surface to form a first surface;
impregnating a platinum-containing solution to the first surface to form a platinum-containing surface;
calcining the platinum-containing surface to form a calcined platinum-containing coating;
impregnating a sodium-containing solution to the calcined platinum-containing coating to form a second surface; and
drying the second surface.

2. The method of claim 1, wherein the sodium-containing solution comprises at least one of NaOH, Na₂CO₃, NaHCO₃, Na₂O₂, and NaOOCH.

3. The method of claim 1, wherein the drying is at a temperature ranging from about 110°C to about 400°C.

4. The method of claim 3, wherein the drying temperature comprises a temperature no greater than the temperature of the reaction catalyzed by the platinum- and sodium-containing catalyst.

5. The method of claim 1, wherein the calcining is at a temperature ranging from about 250°C to about 500°C.

6. The method of claim 1, further comprising reducing the calcined platinum-containing coating.

7. The method of claim 1, further comprising applying an acid or a base to the platinum-containing surface to precipitate a platinum-containing material.

8. The method of claim 7, wherein the method comprises applying a base to the platinum-containing surface, and further comprises treating the surface by:
washing the surface with a solvent;
calcining the surface;
applying a solution of sodium hydroxide to the surface; and
calcining the surface.

9. The method of claim 1, wherein the platinum-containing solution comprises at least one of Pt(NH₃)₄(NO₃)₂, Pt(NH₃)₂(NO₂)₂, Pt(NH₃)₄(OH)₂, K₂Pt(NO₂)₄, Pt(NO₃)₂, H₂PtCl₆, PtCl₄, Pt(NH₃)₄(HCO₃)₂, Pt(NH₃)₄(HPO₄), (NMe₄)₂Pt(OH)₆, H₂Pt(OH)₆, K₂Pt(OH)₆, Na₂Pt(OH)₆, K₂Pt(CN)₆ and K₂Pt(C₂O₄)₂.
